# EUROPEAN PATENT APPLICATION

(11) **EP 4 583 612 A1**
(43) Date of publication of application: **09.07.2025**
(21) Application number: 23867320.6
(22) Date of filing: 08.09.2023
(51) Int. Cl.: H04W 72/23

(54) **COMMUNICATION METHOD AND COMMUNICATION APPARATUS**

(30) Priority: 19.09.2022 CN 202211147612
(71) Applicant: Huawei Technologies Co., Ltd., Shenzhen, Guangdong 518129 (CN)
(72) Inventor: HU, Jinna, Shenzhen, Guangdong 518129 (CN); ZHENG, Lili, Shenzhen, Guangdong 518129 (CN); MA, Chuan, Shenzhen, Guangdong 518129 (CN)
(74) Representative: Maiwald GmbH
(86) International application number: PCT/CN2023/117753
(87) International publication number: WO 2024/061030

(57) **Abstract**

A communication method and a communication apparatus are provided. The method includes: A network device sends first configuration information to a terminal device, where the first configuration information indicates the terminal device to perform cell global identifier CGI measurement, the first configuration information includes an identifier of a first cell and first indication information, and the first indication information indicates the terminal device to measure, in a second cell and/or on a first carrier, CGI information of the first cell. The network device receives a first CGI measurement result from the terminal device, where the first CGI measurement result includes the CGI information of the first cell or information indicating that the CGI information of the first cell fails to be obtained through measurement. The network device indicates, in configuration information, a location at which CGI information is to be measured, so that the terminal device can perform CGI measurement for a cell that does not broadcast system information of the cell.

## Description

This application claims priority to Chinese Patent Application No. 202211147612.4, filed with the China National Intellectual Property Administration on September 19, 2022 and entitled "COMMUNICATION METHOD AND COMMUNICATION APPARATUS", which is incorporated herein by reference in its entirety.

### TECHNICAL FIELD

Embodiments of this application relate to the field of communication technologies, and more specifically, to a communication method and a communication apparatus.

### BACKGROUND

Currently, a simplified signal transmission mode is proposed in a multi-carrier network system. The simplified signal transmission mode includes: One carrier assists another carrier in broadcasting system information (system information, SI). Specifically, carriers in the multi-carrier network system are classified into one basic carrier (basic component carrier, BCC) and several capacity carriers (capacity component carriers, CCCs), where a BCC cell broadcasts a synchronization signal block (synchronization signal block, SSB) and SI, and assists a CCC cell in broadcasting SI.

When SI transmission is performed in the simplified signal transmission mode in the multi-carrier network system, a terminal device cannot normally read a system information block 1 (system information block 1, SIB1) and measure cell global identifier (cell global identifier, CGI) information in the CCC cell. As a result, the terminal cannot be configured to perform CGI measurement.

### SUMMARY

Embodiments of this application provide a communication method, so that a terminal device can perform CGI measurement for a cell that does not broadcast system information of the cell.

According to a first aspect, a communication method is provided. The method may be performed by a network device, or may be performed by a component (for example, a chip or a circuit) of the network device. This is not limited. For ease of description, an example in which the method is performed by the network device is used below for description.

The communication method includes: The network device sends first configuration information to a terminal device, where the first configuration information indicates the terminal device to perform cell global identifier CGI measurement, the first configuration information includes an identifier of a first cell and first indication information, and the first indication information indicates the terminal device to measure, in a second cell and/or on a first carrier, CGI information of the first cell. The network device receives a first CGI measurement result from the terminal device, where the first CGI measurement result includes the CGI information of the first cell or information indicating that the CGI information of the first cell fails to be obtained through measurement.

The first cell is a cell whose CGI information needs to be measured by the terminal device. A common signal broadcast in the first cell by a network device to which the first cell belongs does not include the CGI information of the first cell. A common signal broadcast in the second cell by a network device to which the second cell belongs includes the CGI information of the first cell. A common signal broadcast on the first carrier by one or more network devices to which the first carrier belongs includes the CGI information of the first cell.

Based on the foregoing technical solution, the network device may indicate, in the first configuration information, a location (for example, the second cell and/or the first carrier) at which the CGI information of the first cell can be obtained through measurement, so that when the first cell does not broadcast system information of the first cell, the terminal device can perform CGI measurement at the specified location, to obtain the CGI information of the first cell through measurement.

With reference to the first aspect, in some implementations of the first aspect, the first indication information includes an identifier of the second cell and/or frequency information of the first carrier.

Based on the foregoing technical solution, the network device may explicitly indicate, by including the identifier of the second cell and/or the frequency information of the first carrier in the first configuration information, the location at which the CGI information of the first cell can be obtained through measurement, improving accuracy of the solution.

With reference to the first aspect, in some implementations of the first aspect, the first configuration information further includes at least one of the following information: second indication information, third indication information, or fourth indication information, where the second indication information indicates that the terminal device is allowed to measure, in a cell other than the first cell or on a carrier other than a carrier of the first cell, the CGI information of the first cell; the third indication information indicates whether the terminal device is allowed to report CGI information that is of a third cell and that is obtained through measurement in the second cell and/or on the first carrier; and the fourth indication information indicates a quantity of pieces of CGI information that is of the third cell, that is obtained through measurement in the second cell and/or on the first carrier, and that is allowed to be reported by the terminal device.

The third cell is a cell corresponding to CGI information that is included in a second common signal and that is other than the CGI information of the first cell, or the third cell is a cell corresponding to CGI information that is included in a third common signal and that is other than the CGI information of the first cell.

Based on the foregoing technical solution, the network device may further include the second indication information in the first configuration information, so that the terminal device determines, based on the second indication information, that the CGI information of the first cell can be measured in the second cell and/or on the first carrier. In addition, the network device may further include the third indication information in the first configuration information, so that the terminal device determines whether CGI information that is of a cell other than the first cell and that is obtained through measurement in the second cell and/or on the first carrier can be reported. Further, the network device may further include the fourth indication information in the first configuration information, so that the terminal device determines a quantity of pieces of CGI information that is of the third cell and that can be reported. Measurement behavior of the terminal is made clear to improve accuracy of the solution.

With reference to the first aspect, in some implementations of the first aspect, the fourth indication information indicates that a quantity of third cells is N. If the terminal device obtains CGI information of M third cells through measurement, and M is greater than N, the terminal device may randomly select CGI information of N third cells from the CGI information of the M third cells, and report the CGI information to the network device, where M and N are positive integers.

With reference to the first aspect, in some implementations of the first aspect, when the terminal device reports CGI information of a plurality of third cells, the CGI information of the third cells that is reported by the terminal device includes a first correspondence, where the first correspondence is a correspondence between the plurality of third cells and the CGI information of the plurality of third cells.

With reference to the first aspect, in some implementations of the first aspect, when the third indication information indicates that the terminal device is allowed to report the CGI information that is of the third cell and that is obtained through measurement in the second cell and/or on the first carrier, and the terminal device obtains the CGI information of the at least one third cell through measurement, the method further includes: The network device receives the CGI information of the third cell from the terminal device.

With reference to the first aspect, in some implementations of the first aspect, the CGI information of the third cell includes at least one of the following information: a cell global identifier CGI of the third cell, a tracking area code TAC of the third cell, a RAN area code RANAC of the third cell, a physical cell identifier PCI of the third cell, or a public land mobile network list PLMN List of the third cell.

With reference to the first aspect, in some implementations of the first aspect, the CGI information of the first cell includes at least one of the following information: a CGI of the first cell, a tracking area code TAC of the first cell, a RAN area code RANAC of the first cell, a physical cell identifier PCI of the first cell, or a public land mobile network list PLMN List of the first cell.

With reference to the first aspect, in some implementations of the first aspect, the information indicating that the CGI information of the first cell fails to be obtained through measurement includes at least one of the following information: information indicating that a first timer expires, information indicating that a common signal in the second cell does not include the CGI information of the first cell, information indicating that a common signal on the first carrier does not include the CGI information of the first cell, information indicating that the common signal in the second cell is not found, information indicating that the common signal on the first carrier is not found, information indicating that the second cell is not found, or information indicating that the first carrier is not found.

With reference to the first aspect, in some implementations of the first aspect, the method further includes: The network device sends the first timer to the terminal device, where the first timer indicates maximum time for the terminal device to measure the CGI information of the first cell.

With reference to the first aspect, in some implementations of the first aspect, information about the first timer is carried in an RRC message, or is carried in the first configuration information.

With reference to the first aspect, in some implementations of the first aspect, before the network device sends the first configuration information to the terminal device, the method further includes: The network device determines a first capability of the terminal device, where the first capability includes a capability of the terminal device to measure, in the second cell and/or on the first carrier, the CGI information of the first cell.

Based on the foregoing technical solution, before sending the first configuration information to the terminal device, the network device may determine that the terminal device has the first capability, to avoid a waste of resources caused by sending the first configuration information to a terminal device that does not have the first capability.

With reference to the first aspect, in some implementations of the first aspect, that the network device determines the first capability of the terminal device includes: The first capability is a predefined capability of the terminal device; or the network device receives fifth indication information from the terminal device, where the fifth indication information indicates the first capability of the terminal device.

Based on the foregoing technical solution, the network device may determine, in different manners, whether the terminal device has the first capability, improving flexibility of the solution.

With reference to the first aspect, in some implementations of the first aspect, before the network device receives the fifth indication information from the terminal device, the method further includes: The network device sends a first request message to the terminal device, where the first request message is used to request the terminal device to report all capabilities and/or the first capability.

According to a second aspect, a communication method is provided. The method may be performed by a terminal device, or may be performed by a component (for example, a chip or a circuit) of the terminal device. This is not limited. For ease of description, an example in which the method is performed by the terminal device is used below for description.

The communication method includes: The terminal device receives first configuration information from a network device, where the first configuration information indicates the terminal device to perform cell global identifier CGI measurement, the first configuration information includes an identifier of a first cell and first indication information, and the first indication information indicates the terminal device to measure, in a second cell and/or on a first carrier, CGI information of the first cell. The terminal device sends a first CGI measurement result to the network device, where the first CGI measurement result includes the CGI information of the first cell or information indicating that the CGI information of the first cell fails to be obtained through measurement.

Based on the foregoing technical solution, the terminal device may measure the CGI information of the first cell at a specified location (for example, in the second cell and/or on the first carrier) based on the first configuration information sent by the network device. When the first cell does not broadcast system information of the first cell, the terminal device can perform CGI measurement at the specified location, to obtain the CGI information of the first cell through measurement.

With reference to the second aspect, in some implementations of the second aspect, the first indication information includes an identifier of the second cell and/or frequency information of the first carrier.

With reference to the second aspect, in some implementations of the second aspect, the first configuration information further includes at least one of the following information: second indication information, third indication information, or fourth indication information, where the second indication information indicates that the terminal device is allowed to measure, in a cell other than the first cell or on a carrier other than a carrier of the first cell, the CGI information of the first cell; the third indication information indicates whether the terminal device is allowed to report CGI information that is of a third cell and that is obtained through measurement in the second cell and/or on the first carrier; and the fourth indication information indicates a quantity of pieces of CGI information that is of the third cell, that is obtained through measurement in the second cell and/or on the first carrier, and that is allowed to be reported by the terminal device.

With reference to the second aspect, in some implementations of the second aspect, when the third indication information indicates that the terminal device is allowed to report the CGI information that is of the third cell and that is obtained through measurement in the second cell and/or on the first carrier, the method further includes: The terminal device obtains the CGI information of the third cell through measurement in the second cell and/or on the first carrier. The terminal device sends the CGI information of the third cell to the network device.

With reference to the second aspect, in some implementations of the second aspect, when the quantity N that is indicated by the fourth indication information and that is of the CGI information that is of the third cell, that is obtained through measurement in the second cell and/or on the first carrier, and that is allowed to be reported by the terminal device is less than a quantity M of CGI information that is of the third cell and that is obtained by the terminal device through measurement in the second cell and/or on the first carrier, the method further includes: The terminal device reports CGI information of N third cells according to a preset rule, where the CGI information of the N third cells is any N pieces of the CGI information of the M third cells, and M and N are positive integers.

With reference to the second aspect, in some implementations of the second aspect, when the terminal device reports CGI information of a plurality of third cells, the CGI information of the plurality of third cells that is reported by the terminal device includes a first correspondence, where the first correspondence is a correspondence between the plurality of third cells and the CGI information of the plurality of third cells.

With reference to the second aspect, in some implementations of the second aspect, the CGI information of the third cell includes at least one of the following information: a cell global identifier CGI of the third cell, a tracking area code TAC of the third cell, a RAN area code RANAC of the third cell, a physical cell identifier PCI of the third cell, or a public land mobile network list PLMN List of the third cell.

With reference to the second aspect, in some implementations of the second aspect, the CGI information of the first cell includes at least one of the following information: a CGI of the first cell, a tracking area code TAC of the first cell, a RAN area code RANAC of the first cell, a physical cell identifier PCI of the first cell, or a public land mobile network list PLMN List of the first cell.

With reference to the second aspect, in some implementations of the second aspect, the information indicating that the CGI information of the first cell fails to be obtained through measurement includes at least one of the following information: information indicating that a first timer expires, information indicating that a common signal in the second cell does not include the CGI information of the first cell, information indicating that a common signal on the first carrier does not include the CGI information of the first cell, information indicating that the common signal in the second cell is not found, information indicating that the common signal on the first carrier is not found, information indicating that the second cell is not found, or information indicating that the first carrier is not found.

With reference to the second aspect, in some implementations of the second aspect, the method further includes: The terminal device receives the first timer from the network device, where the first timer indicates maximum time for the terminal device to measure the CGI information of the first cell. The terminal device measures, in the second cell and/or on the first carrier, the CGI information of the first cell in a running period of the first timer.

With reference to the second aspect, in some implementations of the second aspect, the method further includes: The terminal device measures, in the second cell, the CGI information of the first cell; and/or the terminal device measures, on the first carrier, the CGI information of the first cell.

With reference to the second aspect, in some implementations of the second aspect, that the terminal device measures, in the second cell, the CGI information of the first cell includes: The terminal device receives, in the second cell, a first common signal, and measures the CGI information of the first cell from the first common signal. That the terminal device measures, on the first carrier, the CGI information of the first cell includes: The terminal device receives, on the first carrier, a second common signal, and measures the CGI information of the first cell from the second common signal.

With reference to the second aspect, in some implementations of the second aspect, before the terminal device receives the first configuration information from the network device, the method further includes: The terminal device sends fifth indication information to the network device, where the fifth indication information indicates a first capability of the terminal device, and the first capability includes a capability of the terminal device to measure, in the second cell and/or on the first carrier, the CGI information of the first cell.

With reference to the second aspect, in some implementations of the second aspect, before the terminal device sends the fifth indication information to the network device, the method further includes: The terminal device receives a first request message from the network device, where the first request message is used to request the terminal device to report all capabilities and/or the first capability.

According to a third aspect, a communication apparatus is provided. The apparatus is configured to perform the method provided in the first aspect.

The apparatus includes: a sending unit, configured to send first configuration information to a terminal device, where the first configuration information indicates the terminal device to perform cell global identifier CGI measurement, the first configuration information includes an identifier of a first cell and first indication information, and the first indication information indicates the terminal device to measure, in a second cell and/or on a first carrier, CGI information of the first cell; and a receiving unit, configured to receive a first CGI measurement result from the terminal device, where the first CGI measurement result includes the CGI information of the first cell or information indicating that the CGI information of the first cell fails to be obtained through measurement.

With reference to the third aspect, in some implementations of the third aspect, the first indication information includes an identifier of the second cell and/or frequency information of the first carrier.

With reference to the third aspect, in some implementations of the third aspect, the first configuration information further includes at least one of the following information: second indication information, third indication information, or fourth indication information, where the second indication information indicates that the terminal device is allowed to measure, in a cell other than the first cell or on a carrier other than a carrier of the first cell, the CGI information of the first cell; the third indication information indicates whether the terminal device is allowed to report CGI information that is of a third cell and that is obtained through measurement in the second cell and/or on the first carrier; and the fourth indication information indicates a quantity of pieces of CGI information that is of the third cell, that is obtained through measurement in the second cell and/or on the first carrier, and that is allowed to be reported by the terminal device.

With reference to the third aspect, in some implementations of the third aspect, the fourth indication information indicates that a quantity of third cells is N. If the terminal device obtains CGI information of M third cells through measurement, and M is greater than N, the terminal device may randomly select CGI information of N third cells from the CGI information of the M third cells, and report the CGI information to a network device, where M and N are positive integers.

With reference to the third aspect, in some implementations of the third aspect, when the terminal device reports CGI information of a plurality of third cells, the CGI information of the third cells that is reported by the terminal device includes a first correspondence, where the first correspondence is a correspondence between the plurality of third cells and the CGI information of the plurality of third cells.

With reference to the third aspect, in some implementations of the third aspect, when the third indication information indicates that the terminal device is allowed to report the CGI information that is of the third cell and that is obtained through measurement in the second cell and/or on the first carrier, and the terminal device obtains the CGI information of the third cell through measurement, the receiving unit is further configured to receive the CGI information of the third cell from the terminal device.

With reference to the third aspect, in some implementations of the third aspect, the CGI information of the third cell includes at least one of the following information: a cell global identifier CGI of the third cell, a tracking area code TAC of the third cell, a RAN area code RANAC of the third cell, a physical cell identifier PCI of the third cell, or a public land mobile network list PLMN List of the third cell.

With reference to the third aspect, in some implementations of the third aspect, the CGI information of the first cell includes at least one of the following information: a CGI of the first cell, a tracking area code TAC of the first cell, a RAN area code RANAC of the first cell, a physical cell identifier PCI of the first cell, or a public land mobile network list PLMN List of the first cell.

With reference to the third aspect, in some implementations of the third aspect, the information indicating that the CGI information of the first cell fails to be obtained through measurement includes at least one of the following information: information indicating that a first timer expires, information indicating that a common signal in the second cell does not include the CGI information of the first cell, information indicating that a common signal on the first carrier does not include the CGI information of the first cell, information indicating that the common signal in the second cell is not found, information indicating that the common signal on the first carrier is not found, information indicating that the second cell is not found, or information indicating that the first carrier is not found.

With reference to the third aspect, in some implementations of the third aspect, the sending unit is further configured to send the first timer to the terminal device, where the first timer indicates maximum time for the terminal device to measure the CGI information of the first cell.

With reference to the third aspect, in some implementations of the third aspect, information about the first timer is carried in an RRC message, or is carried in the first configuration information.

With reference to the third aspect, in some implementations of the third aspect, the apparatus further includes: a processing unit, configured to determine a first capability of the terminal device, where the first capability includes a capability of the terminal device to measure, in the second cell and/or on the first carrier, the CGI information of the first cell.

With reference to the third aspect, in some implementations of the third aspect, the determining the first capability of the terminal device includes: The first capability is a predefined capability of the terminal device; or the receiving unit receives fifth indication information from the terminal device, where the fifth indication information indicates the first capability of the terminal device.

With reference to the third aspect, in some implementations of the third aspect, before the receiving unit receives the fifth indication information from the terminal device, the sending unit sends a first request message to the terminal device, where the first request message is used to request the terminal device to report all capabilities and/or the first capability.

For beneficial effects of the method shown in the third aspect and the possible designs of the third aspect, refer to the beneficial effects in the first aspect and the possible designs of the first aspect.

According to a fourth aspect, a communication apparatus is provided. The apparatus is configured to perform the method provided in the second aspect.

The communication apparatus includes: a receiving unit, configured to receive first configuration information from a network device, where the first configuration information indicates the communication apparatus to perform cell global identifier CGI measurement, the first configuration information includes an identifier of a first cell and first indication information, and the first indication information indicates the communication apparatus to measure, in a second cell and/or on a first carrier, CGI information of the first cell; and a sending unit, configured to send a first CGI measurement result to the network device, where the first CGI measurement result includes the CGI information of the first cell or information indicating that the CGI information of the first cell fails to be obtained through measurement.

With reference to the fourth aspect, in some implementations of the fourth aspect, the first indication information includes an identifier of the second cell and/or frequency information of the first carrier.

With reference to the fourth aspect, in some implementations of the fourth aspect, the first configuration information further includes at least one of the following information: second indication information, third indication information, or fourth indication information, where the second indication information indicates that the terminal device is allowed to measure, in a cell other than the first cell or on a carrier other than a carrier of the first cell, the CGI information of the first cell; the third indication information indicates whether the terminal device is allowed to report CGI information that is of a third cell and that is obtained through measurement in the second cell and/or on the first carrier; and the fourth indication information indicates a quantity of pieces of CGI information that is of the third cell, that is obtained through measurement in the second cell and/or on the first carrier, and that is allowed to be reported by the terminal device.

With reference to the fourth aspect, in some implementations of the fourth aspect, when the third indication information indicates that the communication apparatus is allowed to report the CGI information that is of the third cell and that is obtained through measurement in the second cell and/or on the first carrier, the apparatus further includes: a measurement unit, configured to obtain the CGI information of the third cell through measurement in the second cell and/or on the first carrier. The sending unit is further configured to send the CGI information of the third cell to the network device.

With reference to the fourth aspect, in some implementations of the fourth aspect, when the quantity N that is indicated by the fourth indication information and that is of the CGI information that is of the third cell, that is obtained through measurement in the second cell and/or on the first carrier, and that is allowed to be reported by the communication apparatus is less than a quantity M of CGI information that is of the third cell and that is obtained by the communication apparatus through measurement in the second cell and/or on the first carrier, the sending unit reports CGI information of N third cells according to a preset rule, where the CGI information of the N third cells is any N pieces of the CGI information of the M third cells, and M and N are positive integers.

With reference to the fourth aspect, in some implementations of the fourth aspect, when the sending unit reports CGI information of a plurality of third cells, the CGI information of the plurality of third cells that is reported by the sending unit includes a first correspondence, where the first correspondence is a correspondence between the plurality of third cells and the CGI information of the plurality of third cells.

With reference to the fourth aspect, in some implementations of the fourth aspect, the CGI information of the third cell includes at least one of the following information: a cell global identifier CGI of the third cell, a tracking area code TAC of the third cell, a RAN area code RANAC of the third cell, a physical cell identifier PCI of the third cell, or a public land mobile network list PLMN List of the third cell.

With reference to the fourth aspect, in some implementations of the fourth aspect, the CGI information of the first cell includes at least one of the following information: a CGI of the first cell, a tracking area code TAC of the first cell, a RAN area code RANAC of the first cell, a physical cell identifier PCI of the first cell, or a public land mobile network list PLMN List of the first cell.

With reference to the fourth aspect, in some implementations of the fourth aspect, the information indicating that the CGI information of the first cell fails to be obtained through measurement includes at least one of the following information: information indicating that a first timer expires, information indicating that a common signal in the second cell does not include the CGI information of the first cell, information indicating that a common signal on the first carrier does not include the CGI information of the first cell, information indicating that the common signal in the second cell is not found, information indicating that the common signal on the first carrier is not found, information indicating that the second cell is not found, or information indicating that the first carrier is not found.

With reference to the fourth aspect, in some implementations of the fourth aspect, the receiving unit is further configured to receive the first timer from the network device, where the first timer indicates maximum time for the terminal device to measure the CGI information of the first cell. The measurement unit is configured to measure, in the second cell and/or on the first carrier, the CGI information of the first cell in a running period of the first timer.

With reference to the fourth aspect, in some implementations of the fourth aspect, the apparatus further includes: a measurement unit, configured to measure, in the second cell, the CGI information of the first cell; and/or measure, on the first carrier, the CGI information of the first cell.

With reference to the fourth aspect, in some implementations of the fourth aspect, that the measurement unit measures, in the second cell, the CGI information of the first cell includes: The measurement unit receives, in the second cell, a first common signal, and measures the CGI information of the first cell from the first common signal. That the measurement unit measures, on the first carrier, the CGI information of the first cell includes: The measurement unit receives, on the first carrier, a second common signal, and measures the CGI information of the first cell from the second common signal.

With reference to the fourth aspect, in some implementations of the fourth aspect, before the receiving unit receives the first configuration information from the network device, the sending unit is further configured to send fifth indication information to the network device, where the fifth indication information indicates a first capability of the communication apparatus, and the first capability includes a capability of the communication apparatus to measure, in the second cell and/or on the first carrier, the CGI information of the first cell.

With reference to the fourth aspect, in some implementations of the fourth aspect, before the sending unit sends the fifth indication information to the network device, the receiving unit receives a first request message from the network device, where the first request message is used to request the communication apparatus to report all capabilities and/or the first capability.

For beneficial effects of the apparatus shown in the fourth aspect and the possible designs of the fourth aspect, refer to the beneficial effects in the second aspect and the possible designs of the second aspect.

According to a fifth aspect, a communication method is provided. The method may be performed by a network device, or may be performed by a component (for example, a chip or a circuit) of the network device. This is not limited. For ease of description, an example in which the method is performed by the network device is used below for description.

The communication method includes: The network device sends second configuration information to a terminal device, where the second configuration information indicates the terminal device to perform cell global identifier CGI measurement, the second configuration information includes an identifier of a fourth cell and sixth indication information, and the sixth indication information indicates the terminal device to report CGI information that is of a fifth cell and that is obtained through measurement in the fourth cell. The network device receives a second CGI measurement result from the terminal device, where the second CGI measurement result includes at least one of the following:
the CGI information of the fourth cell, the CGI information of the fifth cell, information indicating that the CGI information of the fourth cell fails to be obtained through measurement in the fourth cell, information indicating that the CGI information of the fifth cell fails to be obtained through measurement in the fourth cell, or information indicating that CGI information of any cell fails to be obtained through measurement in the fourth cell.

The fourth cell is a cell whose CGI information needs to be measured by the terminal device, and a common signal broadcast in the fourth cell by a network device to which the fourth cell belongs includes the CGI information of the fourth cell, and may further include the CGI information of the fifth cell.

Based on the foregoing technical solution, the network device may indicate, by using the second configuration information, the terminal device to measure CGI information of another cell (for example, the CGI information of the fifth cell), so that when the fifth cell does not broadcast system information of the fifth cell, the terminal device can still obtain the CGI information of the fifth cell in a procedure of measuring the CGI information of the fourth cell, to perform CGI measurement.

With reference to the fifth aspect, in some implementations of the fifth aspect, the second configuration information further includes seventh indication information, and the seventh indication information indicates a quantity of pieces of CGI information that is of the fifth cell, that is obtained through measurement in the fourth cell, and that is allowed to be reported by the terminal device.

With reference to the fifth aspect, in some implementations of the fifth aspect, the seventh indication information indicates that a quantity of fifth cells is P. If the terminal device obtains CGI information of Q fifth cells through measurement, and Q is greater than P, the terminal device may randomly select CGI information of P fifth cells from the CGI information of the Q fifth cells, and report the CGI information to the network device.

With reference to the fifth aspect, in some implementations of the fifth aspect, when the terminal device reports CGI information of a plurality of fifth cells, the CGI information of the plurality of fifth cells that is reported by the terminal device includes a second correspondence, where the second correspondence is a correspondence between the plurality of fifth cells and the CGI information of the plurality of fifth cells.

With reference to the fifth aspect, in some implementations of the fifth aspect, the method further includes: The network device sends a second timer to the terminal device, where the second timer indicates maximum time for the terminal device to measure the second CGI measurement result.

With reference to the fifth aspect, in some implementations of the fifth aspect, before the network device sends the second configuration information to the terminal device, the method further includes: The network device determines a second capability of the terminal device, where the second capability includes a capability of the terminal device to measure, in the fourth cell, the CGI information of the fifth cell.

Based on the foregoing technical solution, before sending the second configuration information to the terminal device, the network device may determine that the terminal device has the second capability, to avoid a waste of resources caused by sending the second configuration information to a terminal device that does not have the second capability.

With reference to the fifth aspect, in some implementations of the fifth aspect, that the network device determines that the terminal device has the second capability includes: The second capability is a predefined capability of the terminal device; or the network device receives eighth indication information from the terminal device, where the eighth indication information indicates that the terminal device has the second capability.

With reference to the fifth aspect, in some implementations of the fifth aspect, before the network device receives the eighth indication information from the terminal device, the method further includes: The network device sends a second request message to the terminal device, where the second request message is used to request the terminal device to report all capabilities and/or the second capability.

With reference to the fifth aspect, in some implementations of the fifth aspect, the CGI information of the fourth cell includes at least one of the following information: a CGI of the fourth cell, a tracking area code TAC of the fourth cell, a RAN area code RANAC of the fourth cell, a physical cell identifier PCI of the fourth cell, or a public land mobile network list PLMN List of the fourth cell.

With reference to the fifth aspect, in some implementations of the fifth aspect, the CGI information of the fifth cell includes at least one of the following information: a CGI of the fifth cell, a tracking area code TAC of the fifth cell, a RAN area code RANAC of the fifth cell, a physical cell identifier PCI of the fifth cell, or a public land mobile network list PLMN List of the fifth cell.

With reference to the fifth aspect, in some implementations of the fifth aspect, the information indicating that the CGI information of the fourth cell fails to be obtained through measurement includes at least one of the following information: information indicating that the second timer expires, information indicating that a common signal in the fourth cell does not include the CGI information of the fourth cell, information indicating that the fourth cell is not found, or information indicating that the common signal in the fourth cell is not found.

With reference to the fifth aspect, in some implementations of the fifth aspect, the information indicating that the CGI information of the fifth cell fails to be obtained through measurement includes at least one of the following information: information indicating that the second timer expires, information indicating that a common signal in the fourth cell does not include the CGI information of the fifth cell, information indicating that the fourth cell is not found, or information indicating that the common signal in the fourth cell is not found.

With reference to the fifth aspect, in some implementations of the fifth aspect, the information indicating that CGI information of any cell fails to be obtained through measurement includes at least one of the following information: information indicating that the second timer expires, information indicating that a common signal in the fourth cell does not include CGI information of any cell, information indicating that the fourth cell is not found, or information indicating that the common signal in the fourth cell is not found.

According to a sixth aspect, a communication method is provided. The method may be performed by a terminal device, or may be performed by a component (for example, a chip or a circuit) of the terminal device. This is not limited. For ease of description, an example in which the method is performed by the terminal device is used below for description.

The communication method includes: The terminal device receives second configuration information from a network device, where the second configuration information indicates the terminal device to perform cell global identifier CGI measurement, and the second configuration information includes an identifier of a fourth cell; the terminal device measures, in the fourth cell, CGI information of the fourth cell and CGI information of a fifth cell; and the terminal device sends a second CGI measurement result to the network device, where the second CGI measurement result includes at least one of the following:
the CGI information of the fourth cell, the CGI information of the fifth cell, information indicating that the CGI information of the fourth cell fails to be obtained through measurement in the fourth cell, information indicating that the CGI information of the fifth cell fails to be obtained through measurement in the fourth cell, or information indicating that CGI information of any cell fails to be obtained through measurement in the fourth cell.

Based on the foregoing technical solution, the terminal device may measure and report the CGI information of the fifth cell in a process of measuring the CGI information of the fourth cell based on the second configuration information sent by the network device, so that when the fifth cell does not broadcast system information of the fifth cell, the terminal device can still obtain the CGI information of the fifth cell in a procedure of measuring the CGI information of the fourth cell, to perform CGI measurement.

With reference to the sixth aspect, in some implementations of the sixth aspect, the second configuration information further includes sixth indication information, and the sixth indication information indicates the terminal device to report the CGI information that is of the fifth cell and that is obtained through measurement in the fourth cell.

With reference to the sixth aspect, in some implementations of the sixth aspect, the second configuration information further includes seventh indication information, and the seventh indication information indicates a quantity of pieces of CGI information that is of the fifth cell, that is obtained through measurement in the fourth cell, and that is allowed to be reported by the terminal device.

With reference to the sixth aspect, in some implementations of the sixth aspect, when the quantity P that is indicated by the seventh indication information and that is of the CGI information that is of the fifth cell, that is obtained through measurement in the fourth cell, and that is allowed to be reported by the terminal device is less than a quantity Q of CGI information that is of the fifth cell and that is obtained by the terminal device through measurement in the fourth cell, the method further includes: The terminal device reports CGI information of P fifth cells according to a preset rule, where the CGI information of the P fifth cells is any P pieces of the CGI information of the Q fifth cells.

With reference to the sixth aspect, in some implementations of the sixth aspect, when the terminal device reports CGI information of a plurality of fifth cells, the CGI information of the plurality of fifth cells that is reported by the terminal device includes a second correspondence, where the second correspondence is a correspondence between the plurality of fifth cells and the CGI information of the plurality of fifth cells.

With reference to the sixth aspect, in some implementations of the sixth aspect, the method further includes: The terminal device receives a second timer from the network device, where the second timer indicates maximum time for the terminal device to measure the second CGI measurement result; and the terminal device measures, in the fourth cell, the CGI information of the fourth cell and the CGI information of the fifth cell in a running period of the second timer.

With reference to the sixth aspect, in some implementations of the sixth aspect, before the terminal device receives the second configuration information from the network device, the method further includes: The terminal device sends eighth indication information to the network device, where the eighth indication information indicates that the terminal device has a second capability, and the second capability includes a capability of the terminal device to measure, in the fourth cell, the CGI information of the fifth cell.

With reference to the sixth aspect, in some implementations of the sixth aspect, before the terminal device sends the eighth indication information to the network device, the method further includes: The terminal device receives a second request message from a network device to which a serving cell belongs, where the second request message is used to request the terminal device to report all capabilities and/or the second capability.

With reference to the sixth aspect, in some implementations of the sixth aspect, that the terminal device measures, in the fourth cell, the CGI information of the fourth cell and the CGI information of the fifth cell includes: The terminal device receives, in the fourth cell, a third common signal, and measures the CGI information of the fourth cell and the CGI information of the fifth cell from the third common signal.

With reference to the sixth aspect, in some implementations of the sixth aspect, the information indicating that the CGI information of the fourth cell fails to be obtained through measurement includes at least one of the following information: information indicating that the second timer expires, information indicating that a common signal in the fourth cell does not include the CGI information of the fourth cell, information indicating that the fourth cell is not found, or information indicating that the common signal in the fourth cell is not found.

With reference to the sixth aspect, in some implementations of the sixth aspect, the information indicating that the CGI information of the fifth cell fails to be obtained through measurement includes at least one of the following information: information indicating that the second timer expires, information indicating that a common signal in the fourth cell does not include the CGI information of the fifth cell, information indicating that the fourth cell is not found, or information indicating that the common signal in the fourth cell is not found.

With reference to the sixth aspect, in some implementations of the sixth aspect, the information indicating that CGI information of any cell fails to be obtained through measurement includes at least one of the following information: information indicating that the second timer expires, information indicating that a common signal in the fourth cell does not include CGI information of any cell, information indicating that the fourth cell is not found, or information indicating that the common signal in the fourth cell is not found.

According to a seventh aspect, a communication apparatus is provided. The apparatus is configured to perform the apparatus provided in the fifth aspect.

The communication apparatus includes: a sending unit, configured to send second configuration information to a terminal device, where the second configuration information indicates the terminal device to perform cell global identifier CGI measurement, the second configuration information includes an identifier of a fourth cell and sixth indication information, and the sixth indication information indicates the terminal device to report CGI information that is of a fifth cell and that is obtained through measurement in the fourth cell; and a receiving unit, configured to receive a second CGI measurement result from the terminal device, where the second CGI measurement result includes at least one of the following:
CGI information of the fourth cell, the CGI information of the fifth cell, information indicating that the CGI information of the fourth cell fails to be obtained through measurement in the fourth cell, information indicating that the CGI information of the fifth cell fails to be obtained through measurement in the fourth cell, or information indicating that CGI information of any cell fails to be obtained through measurement in the fourth cell.

With reference to the seventh aspect, in some implementations of the seventh aspect, the second configuration information further includes seventh indication information, and the seventh indication information indicates a quantity of pieces of CGI information that is of the fifth cell, that is obtained through measurement in the fourth cell, and that is allowed to be reported by the terminal device.

With reference to the seventh aspect, in some implementations of the seventh aspect, the seventh indication information indicates that a quantity of fifth cells is P. If the terminal device obtains CGI information of Q fifth cells through measurement, and Q is greater than P, the terminal device may randomly select CGI information of P fifth cells from the CGI information of the Q fifth cells, and report the CGI information to a network device.

With reference to the seventh aspect, in some implementations of the seventh aspect, when the terminal device reports CGI information of a plurality of fifth cells, the CGI information of the plurality of fifth cells that is reported by the terminal device includes a second correspondence, where the second correspondence is a correspondence between the plurality of fifth cells and the CGI information of the plurality of fifth cells.

With reference to the seventh aspect, in some implementations of the seventh aspect, the sending unit is further configured to send a second timer to the terminal device, where the second timer indicates maximum time for the terminal device to measure the second CGI measurement result.

With reference to the seventh aspect, in some implementations of the seventh aspect, before the sending unit sends the second configuration information to the terminal device, the apparatus further includes: a processing unit, configured to determine a second capability of the terminal device, where the second capability includes a capability of the terminal device to measure, in the fourth cell, the CGI information of the fifth cell.

With reference to the seventh aspect, in some implementations of the seventh aspect, determining that the terminal device has the second capability includes: The second capability is a predefined capability of the terminal device; or the receiving unit receives eighth indication information from the terminal device, where the eighth indication information indicates that the terminal device has the second capability.

With reference to the seventh aspect, in some implementations of the seventh aspect, before the receiving unit receives the eighth indication information from the terminal device, the sending unit is further configured to send a second request message to the terminal device, where the second request message is used to request the terminal device to report all capabilities and/or the second capability.

With reference to the seventh aspect, in some implementations of the seventh aspect, the CGI information of the fourth cell includes at least one of the following information: a CGI of the fourth cell, a tracking area code TAC of the fourth cell, a RAN area code RANAC of the fourth cell, a physical cell identifier PCI of the fourth cell, or a public land mobile network list PLMN List of the fourth cell.

With reference to the seventh aspect, in some implementations of the seventh aspect, the CGI information of the fifth cell includes at least one of the following information: a CGI of the fifth cell, a tracking area code TAC of the fifth cell, a RAN area code RANAC of the fifth cell, a physical cell identifier PCI of the fifth cell, or a public land mobile network list PLMN List of the fifth cell.

With reference to the seventh aspect, in some implementations of the seventh aspect, the information indicating that the CGI information of the fourth cell fails to be obtained through measurement includes at least one of the following information: information indicating that the second timer expires, information indicating that a common signal in the fourth cell does not include the CGI information of the fourth cell, information indicating that the fourth cell is not found, or information indicating that the common signal in the fourth cell is not found.

With reference to the seventh aspect, in some implementations of the seventh aspect, the information indicating that the CGI information of the fifth cell fails to be obtained through measurement includes at least one of the following information: information indicating that the second timer expires, information indicating that a common signal in the fourth cell does not include the CGI information of the fifth cell, information indicating that the fourth cell is not found, or information indicating that the common signal in the fourth cell is not found.

With reference to the seventh aspect, in some implementations of the seventh aspect, the information indicating that CGI information of any cell fails to be obtained through measurement includes at least one of the following information: information indicating that the second timer expires, information indicating that a common signal in the fourth cell does not include CGI information of any cell, information indicating that the fourth cell is not found, or information indicating that the common signal in the fourth cell is not found.

For beneficial effects of the method shown in the seventh aspect and the possible designs of the seventh aspect, refer to the beneficial effects in the fifth aspect and the possible designs of the fifth aspect.

According to an eighth aspect, a communication apparatus is provided. The apparatus is configured to perform the method provided in the sixth aspect.

The communication apparatus includes: a receiving unit, configured to receive second configuration information from a network device, where the second configuration information indicates the communication apparatus to perform cell global identifier CGI measurement, and the second configuration information includes an identifier of a fourth cell; a measurement unit, configured to measure, in the fourth cell, CGI information of the fourth cell and CGI information of a fifth cell; and a sending unit, configured to send a second CGI measurement result to the network device, where the second CGI measurement result includes at least one of the following:
the CGI information of the fourth cell, the CGI information of the fifth cell, information indicating that the CGI information of the fourth cell fails to be obtained through measurement in the fourth cell, information indicating that the CGI information of the fifth cell fails to be obtained through measurement in the fourth cell, or information indicating that CGI information of any cell fails to be obtained through measurement in the fourth cell.

With reference to the eighth aspect, in some implementations of the eighth aspect, the second configuration information further includes sixth indication information, and the sixth indication information indicates the communication apparatus to report the CGI information that is of the fifth cell and that is obtained through measurement in the fourth cell.

With reference to the eighth aspect, in some implementations of the eighth aspect, the second configuration information further includes seventh indication information, and the seventh indication information indicates a quantity of pieces of CGI information that is of the fifth cell, that is obtained through measurement in the fourth cell, and that is allowed to be reported by the communication apparatus.

With reference to the eighth aspect, in some implementations of the eighth aspect, when the quantity P that is indicated by the seventh indication information and that is of the CGI information that is of the fifth cell, that is obtained through measurement in the fourth cell, and that is allowed to be reported by the terminal device is less than a quantity Q of CGI information that is of the fifth cell and that is obtained by the communication apparatus through measurement in the fourth cell, the sending unit reports CGI information of P fifth cells according to a preset rule, where the CGI information of the P fifth cells is any P pieces of the CGI information of the Q third cells.

With reference to the eighth aspect, in some implementations of the eighth aspect, when the sending unit reports CGI information of a plurality of fifth cells, the CGI information of the plurality of fifth cells that is reported by the sending unit includes a second correspondence, where the second correspondence is a correspondence between the plurality of fifth cells and the CGI information of the plurality of fifth cells.

With reference to the eighth aspect, in some implementations of the eighth aspect, the receiving unit is further configured to receive a second timer from the network device, where the second timer indicates maximum time for the terminal device to measure the second CGI measurement result. The measurement unit is configured to measure, in the fourth cell, the CGI information of the fourth cell and the CGI information of the fifth cell in a running period of the second timer.

With reference to the eighth aspect, in some implementations of the eighth aspect, before the receiving unit receives the second configuration information from the network device, the sending unit is further configured to send eighth indication information to the network device, where the eighth indication information indicates that the communication apparatus has a second capability, and the second capability includes a capability of the communication apparatus to measure, in the fourth cell, the CGI information of the fifth cell.

With reference to the eighth aspect, in some implementations of the eighth aspect, before the sending unit sends the eighth indication information to the network device, the receiving unit receives a second request message from a network device to which a serving cell belongs, where the second request message is used to request the communication apparatus to report all capabilities and/or the second capability.

With reference to the eighth aspect, in some implementations of the eighth aspect, that the measurement unit measures, in the fourth cell, the CGI information of the fourth cell and the CGI information of the fifth cell includes: The measurement unit receives, in the fourth cell, a third common signal, and measures the CGI information of the fourth cell and the CGI information of the fifth cell from the third common signal.

With reference to the eighth aspect, in some implementations of the eighth aspect, the information indicating that the CGI information of the fourth cell fails to be obtained through measurement includes at least one of the following information: information indicating that the second timer expires, information indicating that a common signal in the fourth cell does not include the CGI information of the fourth cell, information indicating that the fourth cell is not found, or information indicating that the common signal in the fourth cell is not found.

With reference to the eighth aspect, in some implementations of the eighth aspect, the information indicating that the CGI information of the fifth cell fails to be obtained through measurement includes at least one of the following information: information indicating that the second timer expires, information indicating that a common signal in the fourth cell does not include the CGI information of the fifth cell, information indicating that the fourth cell is not found, or information indicating that the common signal in the fourth cell is not found.

With reference to the eighth aspect, in some implementations of the eighth aspect, the information indicating that CGI information of any cell fails to be obtained through measurement includes at least one of the following information: information indicating that the second timer expires, information indicating that a common signal in the fourth cell does not include CGI information of any cell, information indicating that the fourth cell is not found, or information indicating that the common signal in the fourth cell is not found.

For beneficial effects of the method shown in the eighth aspect and the possible designs of the eighth aspect, refer to the beneficial effects in the sixth aspect and the possible designs of the sixth aspect.

According to a ninth aspect, a communication apparatus is provided. The apparatus is configured to perform the method provided in the first aspect or the fifth aspect. Specifically, the communication apparatus may include units and/or modules, for example, a processing unit and a measurement unit, configured to perform the method provided in any one of the implementations of the first aspect or the fifth aspect.

In an implementation, a transceiver unit may be a transceiver or an input/output interface, and the processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to a tenth aspect, a communication apparatus is provided. The apparatus is configured to perform the method provided in the second aspect or the sixth aspect. Specifically, the communication apparatus may include units and/or modules, for example, a processing unit and a measurement unit, configured to perform the method provided in the second aspect or the fourth aspect.

In an implementation, a transceiver unit may be a transceiver or an input/output interface, and the processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to an eleventh aspect, this application provides a processor, configured to perform the methods provided in the foregoing aspects.

Operations such as sending and measuring/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a twelfth aspect, a computer-readable storage medium is provided. The computer-readable storage medium stores program code executed by a device, and the program code is used to perform the methods provided in the foregoing aspects.

According to a thirteenth aspect, a computer program product including instructions is provided. When the computer program product runs on a computer, the computer is enabled to perform the methods provided in the foregoing aspects.

According to a fourteenth aspect, a chip is provided. The chip includes a processor and a communication interface, and the processor reads, through the communication interface, instructions stored in a memory, to perform the methods provided in the foregoing aspects.

Optionally, in an implementation, the chip further includes the memory. The memory stores a computer program or the instructions. The processor is configured to execute the computer program or the instructions stored in the memory. When the computer program or the instructions are executed, the processor is configured to perform the methods provided in the foregoing aspects.

According to a fifteenth aspect, a communication system is provided, and includes the communication apparatus according to the third aspect and the communication apparatus according to the fourth aspect, or includes the communication apparatus according to the seventh aspect and the communication apparatus according to the eighth aspect.

### BRIEF DESCRIPTION OF DRAWINGS

FIG. 1 is a diagram of a communication system 100 to which an embodiment of this application is applicable;
(a) and (b) in FIG. 2 are diagrams of a plurality of carrier systems;
FIG. 3 is a diagram of broadcasting SSBs and SI on a plurality of carriers;
FIG. 4 is a diagram of an energy saving solution;
FIG. 5 is a schematic flowchart of a communication method according to an embodiment of this application;
FIG. 6 is a schematic flowchart of a communication method according to an embodiment of this application;
FIG. 7 is a block diagram of a communication apparatus 10 according to an embodiment of this application;
FIG. 8 is a diagram of another communication apparatus 20 according to an embodiment of this application; and
FIG. 9 is a diagram of a chip system 30 according to an embodiment of this application.

### DESCRIPTION OF EMBODIMENTS

The following describes technical solutions in embodiments of this application with reference to the accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in embodiments of this application may be further applied to device-to-device (device-to-device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

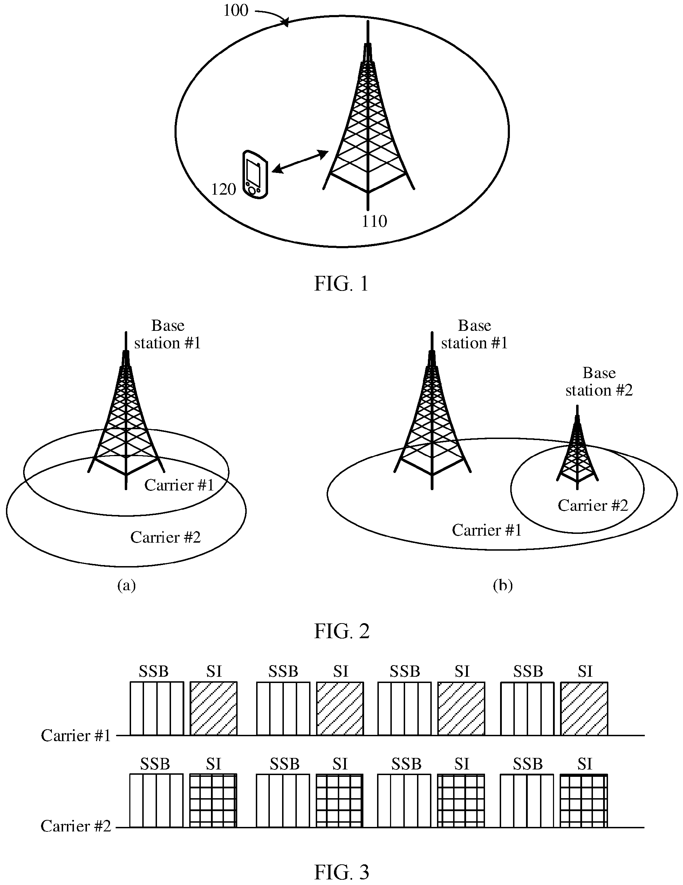

For ease of understanding embodiments of this application, a communication system shown in FIG. 1 is first used as an example to describe in detail a communication system to which an embodiment of this application is applicable. FIG. 1 is a diagram of a communication system 100 to which an embodiment of this application is applicable. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 and the terminal device 120 may communicate with each other through a radio link. A plurality of antennas may be disposed for each communication device, for example, the network device 110 or the terminal device 120. For each communication device in the communication system 100, the disposed plurality of antennas may include at least one transmit antenna configured to send a signal and at least one receive antenna configured to receive a signal. Therefore, the communication devices in the communication system 100, for example, the network device 110 and the terminal device 120, may communicate with each other by using a multi-antenna technology.

By way of example, and not limitation, the network device and the terminal device in the scenario shown in FIG. 1 may communicate in a plurality of manners. For example, the network device and the terminal device communicate in a point-to-point transmission mode or a multi-hop (in other words, relay (relay)) transmission mode. A plurality of network devices communicate with a plurality of terminal devices in a dual-connectivity (dual-connectivity, DC) or multi-connectivity transmission mode. A communication mode between the network device and the terminal device is not limited in this embodiment of this application. For example, transmission between the network device and the terminal device may be on an uplink, a downlink, an access link, a backhaul (backhaul) link, or a sidelink (Sidelink).

A terminal device (terminal equipment) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

By way of example, and not limitation, in embodiments of this application, the wearable device may also be referred to as a wearable intelligent device, and is a general name of wearable devices such as glasses, gloves, watches, clothing, and shoes developed by intelligently designing daily wear by using a wearable technology. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal device may alternatively be a terminal device in an IoT system. An IoT is an important part of future development of information technologies. A main technical feature of the IoT is connecting a thing to a network by using a communication technology, to implement an intelligent network for interconnection between a person and a machine or between things. In embodiments of this application, the IoT technology can implement massive connections, deep coverage, and terminal power saving by using, for example, a narrowband (narrowband, NB) technology.

A network device in embodiments of this application may be any device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the device may be a gNB or a transmission point (TRP or TP) in a 5G system, for example, an NR system, may be one antenna panel or a group of antenna panels (including a plurality of antenna panels) of a base station in the 5G system, or may be a network node, for example, a baseband unit (BBU) or a distributed unit (distributed unit, DU), included in a gNB or a transmission point.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling like RRC layer signaling may also be considered as being sent by the DU or sent by the DU and the AAU. It may be understood that the network device may be a device including one or more of a CU node, a DU node, and an AAU node. In addition, the CU may be classified into a network device in a radio access network (radio access network, RAN), or the CU may be classified into a network device in a core network (core network, CN). This is not limited in this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD) or a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

It should be understood that FIG. 1 uses communication between the network device and the terminal device as an example to briefly describe a communication scenario to which this application can be applied, and this does not impose a limitation on another scenario to which this application can be applied. It should be further understood that FIG. 1 is merely a simplified diagram of an example for ease of understanding. The communication system may further include another network device or may further include another terminal device, which is not shown in FIG. 1.

In addition, this application mainly relates to a multi-carrier network system. To be specific, the communication system shown in FIG. 1 includes a plurality of carriers (or a plurality of cells). In this application, one carrier may correspond to one cell, or one carrier may correspond to a plurality of cells. A plurality of carriers may be deployed on a same network device (co-site deployment, as shown in (a) in FIG. 2, where a carrier #1 and a carrier #2 are deployed on a base station #1), or may be deployed on different network devices (inter-site deployment, as shown in (b) in FIG. 2, where a carrier #1 is deployed on a base station #1, and a carrier #2 is deployed on a base station #2). Usually, on each carrier in a multi-carrier network, a synchronization signal block (Synchronization Signal Block, SSB) and system information (System Information, SI) of the carrier are independently broadcast. FIG. 3 is a diagram of broadcasting SSBs and SI on a plurality of carriers. It can be learned from FIG. 3 that a network device to which a carrier #1 belongs broadcasts, on the carrier #1, an SSB and SI corresponding to the carrier #1, and a network device to which a carrier #2 belongs broadcasts, on the carrier #2, an SSB and SI corresponding to the carrier #2.

In addition, it should be noted that in the multi-carrier network, a "carrier (carrier)" is also usually referred to as a "component carrier (Component Carrier, CC)".

FIG. 1 to FIG. 3 describe the communication systems to which embodiments of this application are applicable. For ease of understanding the technical solutions in embodiments of this application, some terms or concepts in embodiments of this application are first briefly described.
1. Simplified signal: is an energy saving solution in the foregoing multi-carrier network system. A core idea of the solution is that one carrier assists another carrier in broadcasting system information SI. Specifically, this solution has the following main features:
   (1) In the multi-carrier network system, carriers are classified into one basic carrier (Basic Component Carrier, BCC) and several capacity carriers (Capacity Component Carriers, CCCs).
   (2) A BCC cell broadcasts an SSB and SI, and assists a CCC cell in broadcasting SI (that is, the BCC cell broadcasts the SI of the CCC cell).
   (3) The CCC cell does not broadcast an SSB, but broadcasts a new reference signal, namely, a discovery reference signal (Discovery Reference Signal, DRS). The DRS is an improvement on the SSB and has a basic function of the SSB, but occupies fewer OFDM symbols (where the SSB occupies four symbols, and the DRS occupies one to three symbols).
      It should be understood that the CCC cell may alternatively normally broadcast the SSB but not broadcast the DRS. In this manner, a quantity of symbols occupied by the SSB cannot be reduced.
   (4) The CCC cell does not broadcast the SI, and UE measures, in the SI broadcast by the BCC cell, the SI of the CCC cell.

In this solution, a quantity of symbols used by the CCC cell for transmission of the SI and the SSB is greatly reduced, thereby increasing an opportunity of time-domain muting and reducing power consumption. It may be understood that, although power consumption of the BCC cell increases due to an increase in an amount of broadcast data, an increase of power consumption of the BCC cell is less than a decrease of power consumption of the CCC cell. Therefore, overall power consumption of the network can still be reduced.

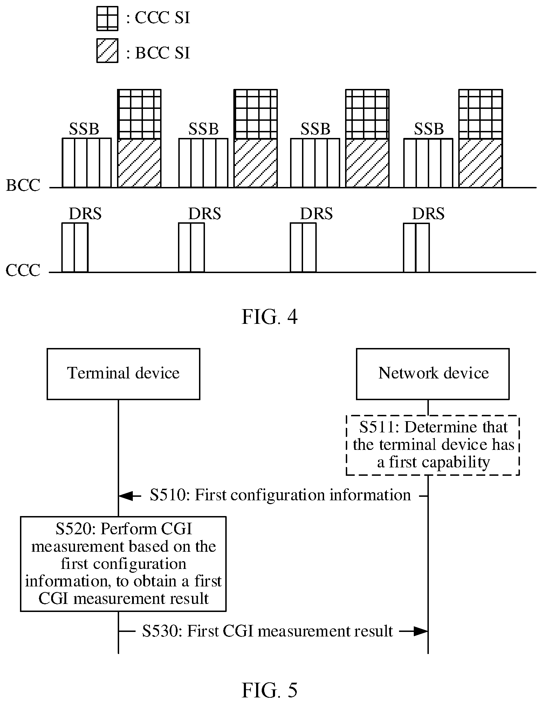

For ease of understanding, the following briefly describes the simplified signal energy saving solution with reference to FIG. 4. FIG. 4 is a diagram of an energy saving solution.

It can be learned from FIG. 4 that a BCC cell broadcasts an SSB and SI (for example, BCC SI shown in FIG. 4), and assists a CCC cell in broadcasting SI (for example, CCC SI shown in FIG. 4). The CCC cell does not broadcast SI, but broadcasts a DRS.

2. Automatic neighbor relation (automatic neighbor relation, ANR): is mainly used to detect and resolve a physical cell identifier (physical cell identifier, PCI) conflict of a cell, automatically configure a missing neighboring cell, and the like. The ANR automatically maintains integrity and validity of a neighbor relation list (neighboring relation table, NRT), so that call drops of a terminal device can be reduced, and a handover success rate of the terminal device can be improved. In addition, the ANR can reduce labor costs of network planning and optimization, and is used as a powerful supplement to network planning and optimization tools.

The following situations may occur in an ANR process.
(1) A serving cell may find a new PCI cell in a measurement report sent by UE. The cell is not in an NRT of the serving cell and does not have corresponding CGI and attribute information.
(2) In the NRT of the serving cell, there are cells that have a same PCI but correspond to different CGI information.
(3) A PCI of a new cell to be added to the NRT of the serving cell already exists in the NRT, but a CGI of the new cell is inconsistent with a CGI corresponding to the same PCI in the NRT. Therefore, a CGI conflict occurs.

To resolve the problem, CGI information of a cell corresponding to a PCI may be measured by using a CGI measurement and reporting function already defined in a current protocol. The following describes CGI measurement and reporting already defined in the current protocol.

3. CGI measurement and reporting: CGI measurement and reporting may be configured by a network side to a terminal by using an RRC connection reconfiguration message, and is a type of measurement performed by the terminal in connected mode. A CGI measurement and reporting procedure is as follows:
(1) A gNodeB delivers a measurement configuration whose measurement report type is reportCGI to UE. The measurement configuration specifies that the UE needs to report CGI-Info (where the measurement configuration information is usually carried in an RRC reconfiguration message) of a cell corresponding to a PCI.
(2) After receiving the measurement configuration (and feeding back an RRC reconfiguration complete message), the UE reads, in the cell corresponding to the PCI, system information SIB1 of the cell corresponding to the PCI, and measures the CGI-Info of the cell from the system information.
(3) The UE reports information in the CGI-Info information element to the gNodeB via a measurement report.

The CGI-Info information element usually includes information such as a CGI, a tracking area code (tracking area code, TAC), a RAN area code (RAN area code, RANAC), a PCI, and a PLMN List that are of the cell. The gNodeB may perform ANR operations such as NRT update and conflict resolution based on the information.

The foregoing briefly describes, with reference to FIG. 1 to FIG. 3, scenarios to which this application is applicable, and basic concepts in this application. It can be learned from the above that, in the existing CGI measurement and reporting procedure, after the terminal is configured to perform CGI measurement and reporting, the terminal needs to read the system information SIB1 of the cell to measure and report the CGI-Info. However, when the system information of the to-be-measured cell is migrated to another cell, for example, a cell on a CCC carrier that uses a simplified signal architecture, the terminal cannot normally read the SIB1 and obtain the CGI-Info in the cell, and therefore cannot perform CGI measurement.

To avoid a problem that the terminal cannot normally perform CGI measurement due to a CGI measurement procedure stipulated in the current protocol, this application provides a communication method, so that the terminal can obtain, through measurement, and report information in CGI-Info of a cell whose system information is migrated.

A specific structure of an execution body performing the method provided in embodiments of this application is not particularly limited in the following embodiments, provided that a program recording code of the method provided in embodiments of this application can be run to perform communication according to the method provided in embodiments of this application. For example, the execution body performing the method provided in embodiments of this application may be a terminal device or an access network device, or may be a functional module that can invoke and execute the program in the terminal device or the access network device.

In addition, to facilitate understanding of embodiments of this application, the following several descriptions are provided.

First, in this application, "indicate" may include "directly indicate" and "indirectly indicate". When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. **In** addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitter device by sending configuration information to a receiver device.

Second, "at least one" in this application means one or more, and "a plurality of" means two or more. In addition, in embodiments of this application, "first", "second", and various numbers (for example, "#1" and "#2") are merely used for differentiation for ease of description, and are not used to limit the scope of embodiments of this application. Sequence numbers in the following processes do not mean an execution sequence. The execution sequence of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "510" and "610" are merely identifiers for ease of description, and do not limit a sequence of performing steps.

Third, in this application, a term like "example" or "for example" is used to represent giving an example, an illustration, or a description. Any embodiment or design scheme described as an "example" or "for example" in this application should not be explained as being more preferred or having more advantages than another embodiment or design scheme. To be precise, use of the term like "example" or "for example" is intended to present a relative concept in a specific manner.

Fourth, "being stored" in embodiments of this application may indicate being stored in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, the "protocol" in embodiments of this application may refer to standard protocols in the communication field, for example, may include an LTE protocol, an NR protocol, and a related protocol applied to a future communication system. This is not limited in this application.

Sixth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

Seventh, in embodiments of this application, "of (of)", "corresponding (corresponding, relevant)", "corresponding (corresponding)", and "associate (associate)" may be interchangeably used sometime. It should be noted that, when a difference between the terms is not emphasized, meanings to be expressed are consistent.

Eighth, in embodiments of this application, "in a case that", "when", and "if" may be interchangeably used sometimes. It should be noted that, when a difference between the terms is not emphasized, meanings to be expressed are consistent.

Without a loss of generality, interaction between a network device and a terminal device is used as an example below to describe in detail the communication method provided in embodiments of this application.

FIG. 5 is a schematic flowchart of a communication method according to an embodiment of this application. The method includes the following steps.

S510: A network device sends first configuration information to a terminal device. In other words, the terminal device receives the first configuration information from the network device.

Specifically, in this embodiment, the terminal device receives the first configuration information delivered by the network device to which a serving cell belongs, where the first configuration information indicates the terminal device to perform CGI measurement.

The first configuration information includes an identifier of a first cell and first indication information. The identifier of the first cell indicates that the terminal device needs to measure and report CGI information of the first cell. The first indication information indicates the terminal device to measure, at a location other than that of the first cell, namely, in a second cell not being the first cell and/or on a first carrier not being a carrier of the first cell, the CGI information of the first cell.

In a possible implementation, the first indication information indicates the terminal device to measure, in the second cell, the CGI information of the first cell.

In another possible implementation, the first indication information indicates the terminal device to measure, on the first carrier, the CGI information of the first cell.

In still another possible implementation, the first indication information indicates the terminal device to measure, in the second cell on the first carrier, the CGI information of the first cell.

It should be understood that the network device may indicate, by using the first configuration information, a plurality of locations at which the CGI information of the first cell can be measured. The second cell and/or the first carrier are/is merely an example. The network device may indicate a plurality of second cells and/or a plurality of first carriers, and the terminal device attempts to measure, at the plurality of locations, the CGI information of the first cell.

For example, the first indication information indicates a second cell #1, a second cell #2, and a second cell #3, indicating that the network device indicates that the terminal device may attempt to measure, in the second cell #1, the second cell #2, and the second cell #3, the CGI information of the first cell. For example, the terminal device sequentially attempts to measure, in the second cell #1, the second cell #2, and the second cell #3, the CGI information of the first cell, until the CGI information of the first cell is obtained through measurement. Alternatively, the CGI information of the first cell fails to be obtained through measurement in the second cell #1, the second cell #2, and the second cell #3 that are indicated by the first indication information.

For another example, the first indication information indicates a first carrier #1, a first carrier #2, and a first carrier #3, indicating that the network device indicates that the terminal device may attempt to measure, on the first carrier #1, the first carrier #2, and the first carrier #3, the CGI information of the first cell.

For still another example, the first indication information indicates a second cell #1 on a first carrier #1, a second cell #2 on the first carrier #1, and a second cell #3 on a first carrier #2, indicating that the network device indicates that the terminal device may attempt to measure, in the second cell #1 on the first carrier #1, the second cell #2 on the first carrier #1, and the second cell #3 on the first carrier #2, the CGI information of the first cell.

For ease of description, in this embodiment, an example in which the first indication information indicates the second cell and/or the first carrier is used for description. The case in which the first indication information indicates the plurality of second cells and/or the plurality of first carriers is similar to the case in which the first indication information indicates the second cell and/or the first carrier. Details are not described in this embodiment again.

Optionally, the first indication information includes an identifier of the second cell, to indicate to measure, in the second cell, the CGI information of the first cell; and/or the first indication information includes frequency information of the first carrier, to indicate to measure, on the first carrier, the CGI information of the first cell.

For example, the identifier of the first cell identifies the first cell, and may be, for example, a PCI of the first cell; and the identifier of the second cell identifies the second cell, and may be, for example, a PCI of the second cell.

The first cell is a cell whose CGI information needs to be measured by the terminal device. A common signal broadcast in the first cell by a network device to which the first cell belongs does not include the CGI information of the first cell. A common signal broadcast in the second cell by a network device to which the second cell belongs includes the CGI information of the first cell. A common signal broadcast on the first carrier by one or more network devices to which the first carrier belongs includes the CGI information of the first cell.

For example, the second cell is a cell corresponding to a BCC, and the second cell broadcasts an SSB and system information, where the system information includes at least the following content:
(1) information about the second cell, including the identifier of the second cell, access information of the second cell, configuration information of the second cell, and the like; and
(2) information about the first cell that assists in sending the system information, including the identifier of the first cell, access information of the first cell, configuration information of the first cell, the CGI information of the first cell, or the like. For example, SIB1 information of the first cell is sent in the second cell, and a CGI-info field included in the SIB1 information of the first cell indicates the CGI information of the first cell.

For another example, the first carrier is a BCC, and a common signal broadcast on the BCC by one or more network devices to which the BCC belongs includes at least information about at least one cell (for example, the second cell) corresponding to the BCC and information about at least one cell (for example, the first cell) corresponding to a CCC. The information about the first cell includes the identifier of the first cell, the access information of the first cell, the configuration information of the first cell, the CGI information of the first cell, or the like.

Optionally, the first cell is a cell corresponding to the CCC, and the first cell broadcasts an SSB or a DRS, but does not broadcast system information of the first cell.

Optionally, the first configuration information may be a measurement configuration that is delivered by the network device to UE via an RRC connection reconfiguration message and whose measurement report type is reportCGI.

For example, the first configuration information further includes at least one of the following information:
measurement type indication information, second indication information, third indication information, or fourth indication information, where the measurement type indication information indicates whether to measure, in another cell, CGI information of a to-be-measured cell; information about at least one third cell indicates whether to report CGI information that is of a cell other than the to-be-measured cell and that is obtained through measurement; the second indication information indicates that the terminal device is allowed to measure, in a cell other than the first cell or on a carrier other than a carrier of the first cell, the CGI information of the first cell; the third indication information indicates whether the terminal device is allowed to report CGI information that is of a third cell and that is obtained through measurement in the second cell and/or on the first carrier; and the fourth indication information indicates a quantity of pieces of CGI information that is of the third cell, that is obtained through measurement in the second cell and/or on the first carrier, and that is allowed to be reported by the terminal device.

When the third indication information indicates that the terminal device is allowed to report the CGI information that is of the third cell and that is obtained through measurement in the second cell and/or on the first carrier, the terminal device may attempt to measure, in the second cell and/or on the first carrier, the CGI information of the third cell. If the terminal device obtains the CGI information of the third cell through measurement, the terminal device may report the CGI information of the third cell to the network device.

For example, the fourth indication information indicates the quantity of pieces of CGI information that is of the third cell, that is obtained through measurement in the second cell and/or on the first carrier, and that is allowed to be reported by the terminal device. If CGI information of N third cells is allowed to be reported, the first configuration information may include indication information of N. Optionally, if the terminal device obtains CGI information of M third cells through measurement, and M>N, the terminal device may report CGI information of any N third cells in the CGI information of the M third cells, where M and N are positive integers.

Optionally, the third indication information and the fourth indication information are one piece of indication information. For example, the third indication information indicates the terminal device to report the CGI information that is of the N third cells and that is obtained through measurement in the second cell and/or on the first carrier.

Further, after receiving the first configuration information, the terminal device may perform CGI measurement based on the first configuration information. The method procedure shown in FIG. 5 further includes the following step:
S520: The terminal device performs CGI measurement based on the first configuration information, to obtain a first CGI measurement result.

Specifically, the terminal device attempts to measure, in the second cell and/or on the first carrier, the CGI information of the first cell based on the first indication information in the first configuration information.

For example, that the terminal device measures, in the second cell and/or on the first carrier, the CGI information of the first cell includes the following steps.

Step 1: The terminal device first attempts to measure, in the first cell, the CGI information of the first cell, for example, attempts to receive, in the first cell, the SIB1 that is of the first cell and that is broadcast by the network device to which the first cell belongs, and reads the CGI-info field from the SIB1 of the first cell.

In this embodiment, the network device to which the first cell belongs does not broadcast, in the first cell, the CGI information of the first cell. In other words, the terminal device cannot obtain the CGI information of the first cell through measurement in the first cell.

It should be understood that, in this embodiment, the terminal device may directly perform step 2 instead of performing step 1.

Step 2: The terminal device attempts to measure, in the second cell and/or on the first carrier, the CGI information of the first cell based on the first indication information included in the first configuration information.

For example, the first indication information includes the identifier of the second cell, and the terminal device may attempt to receive, in the second cell, the SIB1 that is of the first cell and that is broadcast by the network device to which the second cell belongs, and read the CGI-info field from the SIB1.

For example, the first indication information includes the frequency information of the first carrier, and the terminal device may attempt to receive, on the first carrier, the SIB1 that is of the first cell and that is broadcast on the first carrier by the one or more network devices to which the first carrier belongs, and read the CGI-info field from the SIB1. For example, the SIB1 of the first cell is measured on a frequency of the first carrier. When there are a plurality of intra-frequency cells, the SIB1 of the first cell is separately measured in the plurality of intra-frequency cells, or the SIB1 of the first cell is measured in a cell with best channel quality in the plurality of intra-frequency cells.

For example, the first indication information includes the identifier of the second cell and the frequency information of the first carrier. The terminal device may sequentially measure, in the second cell and on the first carrier, the SIB1 of the first cell, and read the CGI-info field from the SIB1. Alternatively, the terminal device may sequentially measure, on the first carrier and in the second cell, the SIB1 of the first cell, and read the CGI-info field from the SIB1.

Optionally, when the first indication information included in the first configuration information indicates a plurality of second cells and/or a plurality of first carriers, the terminal device may perform measurement, in a traversal manner, in the plurality of second cells and/or on the plurality of first carriers indicated in the first configuration information until the CGI information of the first cell is obtained through measurement.

According to the descriptions of the first configuration information in step S510, the first configuration information may further include the second indication information that indicates whether the terminal device is allowed to measure, in another cell and/or on another carrier, the CGI information of the first cell. When the first configuration information includes the second indication information, before the terminal device performs step 2, the following step is further included:
Step 3: The terminal device determines, based on the second indication information, whether the terminal device can attempt to measure, in the second cell and/or on the first carrier, the CGI information of the first cell. In this embodiment, it is mainly considered that the network device allows the terminal device to measure, in another cell/on another carrier, the CGI information of the first cell.

It should be understood that, in this embodiment, the terminal device may not need to perform step 3. For example, if the first configuration information does not include the second indication information, the terminal device may not need to perform step 3.

In addition, according to the descriptions of the first configuration information in step S510, the first configuration information may further include the third indication information that indicates the terminal device whether to measure and report CGI information of a cell other than the first cell. When the first configuration information includes the third indication information, a process of obtaining the first CGI measurement result by the terminal device may further include the following step:
Step 4: The terminal device determines, based on the third indication information, whether to report CGI information that is of a cell (for example, the third cell) other than the first cell and that is obtained through measurement. For example, the third indication information indicates the terminal device to report the CGI information that is of the cell other than the first cell and that is obtained through measurement, and the terminal device receives a common message broadcast in the second cell and/or on the first carrier, and attempts to measure a SIB1 of a cell other than the first cell and a CGI-info field in the SIB1 from the common message. Optionally, when the first indication information included in the first configuration information indicates a plurality of second cells and/or a plurality of first carriers, the terminal device may perform measurement, in a traversal manner, in the plurality of second cells and/or on the plurality of first carriers indicated in the first configuration information, and attempt to measure the SIB1 of the cell other than the first cell and the CGI-info field in the SIB1, or may attempt to perform measurement only at some locations. This is not limited in this embodiment.

Optionally, when the terminal device obtains CGI information of a plurality of third cells through measurement, the CGI information of the plurality of third cells that is reported by the terminal device includes a first correspondence, where the first correspondence is a correspondence between the plurality of third cells and the CGI information of the plurality of third cells.

For example, the terminal device obtains, through measurement, CGI information #1 of a third cell #1, CGI information #2 of a third cell #2, and CGI information #3 of a third cell #3, and the terminal device may report that the CGI information #1 corresponds to the third cell #1, the CGI information #2 corresponds to the third cell #2, and the CGI information #3 corresponds to the third cell #3.

It should be noted that Step 2 and Step 4 may be performed simultaneously. To be specific, when attempting to measure, in the second cell and/or on the first carrier, the CGI information of the first cell, the terminal device also attempts to measure the CGI information of the third cell.

For example, the network device may send information about a first timer to the terminal device, where the first timer indicates maximum time for the terminal device to measure the CGI information of the first cell, so that the terminal device performs CGI measurement in a running period of the first timer.

The information about the first timer is carried in an RRC message, or is carried in the foregoing first configuration information.

In a possible implementation, the terminal device may independently determine a start moment of the first timer. For example, the terminal device starts the first timer when receiving the information about the first timer. For another example, the terminal device starts the first timer at a moment at which the terminal device starts to measure the CGI information of the first cell.

Optionally, when the first timer expires, and the terminal device fails to obtain the CGI information of the first cell through measurement, the terminal device stops measuring the CGI information of the first cell.

In another possible implementation, the network device may notify the start moment of the first timer by using the information about the first timer. For example, the information that is about the first timer and that is sent by the network device to the terminal device includes indication information of the start moment of the first timer and duration of the first timer.

In a possible implementation, the first CGI measurement result obtained by the terminal device includes the CGI information of the first cell.

In another possible implementation, the first CGI measurement result obtained by the terminal device includes information indicating that the CGI information of the first cell fails to be obtained through measurement.

In addition, if the terminal device obtains the CGI information of the third cell through measurement, the first CGI measurement result may further include the CGI information of the third cell.

Optionally, the CGI information of the first cell includes at least one of the following information:
a CGI of the first cell, a tracking area code TAC of the first cell, a RAN area code RANAC of the first cell, a physical cell identifier PCI of the first cell, or a public land mobile network list PLMN List of the first cell.

Optionally, the information indicating that the CGI information of the first cell fails to be obtained through measurement includes at least one of the following information:
information indicating that the first timer expires, information indicating that a common signal in the second cell does not include the CGI information of the first cell, information indicating that a common signal on the first carrier does not include the CGI information of the first cell, information indicating that the common signal in the second cell is not found, information indicating that the common signal on the first carrier is not found, information indicating that the second cell is not found, or information indicating that the first carrier is not found.

Specifically, after obtaining the first CGI measurement result, the terminal device reports the first CGI measurement result to the network device. The method procedure shown in FIG. 5 further includes the following step:
S530: The terminal device sends the first CGI measurement result to the network device. In other words, the network device receives the first CGI measurement result from the terminal device.

It should be understood that a procedure for reporting the CGI measurement result is not limited in this embodiment. For details, refer to a procedure for reporting a measurement result in a CGI measurement procedure in an existing protocol. Alternatively, reporting may be performed in another reporting procedure. Details are not described herein again.

For example, before sending the first configuration information to the terminal device, the network device may first determine that the terminal device has a capability of measuring, in the second cell and/or on the first carrier, the CGI information of the first cell, to avoid a waste of resources caused by still delivering the first configuration information when the terminal device cannot perform CGI measurement based on the first configuration information. For ease of description, in this embodiment, a capability of the terminal device to measure, in a specified cell and/or on a specific carrier (for example, the second cell and/or the first carrier), CGI information of a to-be-measured cell (for example, the first cell) is referred to as a first capability. The method procedure shown in FIG. 5 further includes the following step:
S511: The network device determines that the terminal device has the first capability.

In a possible implementation, the first capability of the terminal device is mandatory by default.

For example, it is predefined in a protocol that the terminal device has the first capability.

In another possible implementation, the terminal device actively sends fifth indication information to the network device, where the fifth indication information indicates the first capability of the terminal device.

For example, the terminal device actively reports all capabilities and/or the first capability of the terminal device.

In still another possible implementation, the network device sends a first request message to the terminal device, where the first request message is used to request the terminal device to report all capabilities and/or the first capability.

For example, the network device delivers a terminal device capability reporting request to the terminal device, to indicate the terminal device to report whether the terminal device has the first capability, or indicate the terminal device to report a terminal device capability including the first capability.

In the embodiment shown in FIG. 5, the measurement configuration delivered by the network device includes other information (for example, the foregoing first indication information) about a location at which CGI information of a to-be-measured cell (for example, the foregoing first cell) can be measured, so that the terminal device can attempt to measure, in another indicated cell/on another indicated carrier, the CGI information of the to-be-measured cell. This is applicable to a scenario in which the network device sends the measurement configuration to the terminal device when the network device knows a (possible) location at which the CGI information of the to-be-measured cell is measured.

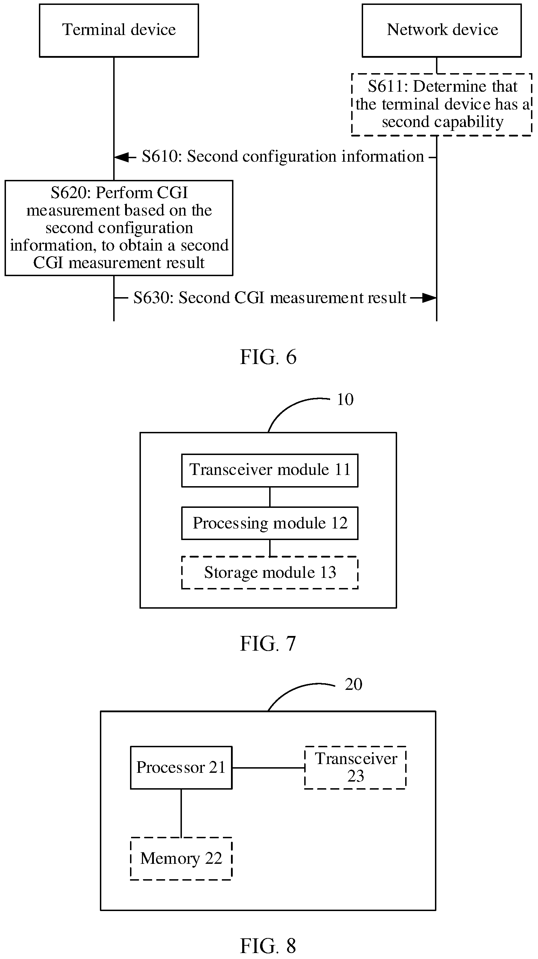

This application further provides another communication method. An indication for reporting CGI information of an associated cell is added to the measurement configuration delivered by the network device, so that CGI information of a cell whose CGI information cannot be measured due to system information migration can be measured. The following describes the communication method in detail with reference to FIG. 6.

FIG. 6 is a schematic flowchart of another communication method according to an embodiment of this application. The method includes the following steps.

S610: A network device sends second configuration information to a terminal device. In other words, the terminal device receives the second configuration information from the network device.

Specifically, in this embodiment, the terminal device receives the second configuration information delivered by the network device to which a serving cell belongs, where the second configuration information indicates the terminal device to perform CGI measurement.

The second configuration information includes an identifier of a fourth cell and sixth indication information, where the identifier of the fourth cell indicates that the terminal device needs to measure and report CGI information of the fourth cell, and the sixth indication information indicates the terminal device to report CGI information that is of a fifth cell other than the fourth cell and that is obtained through measurement in the fourth cell.

Optionally, the sixth indication information may indicate the terminal device to measure and report CGI information of at least one fifth cell.

Optionally, the second configuration information may further include seventh indication information, and the seventh indication information indicates a quantity of pieces of CGI information that is of the fifth cell, that is obtained through measurement in the fourth cell, and that is allowed to be reported by the terminal device.

For example, the seventh indication information indicates the quantity of pieces of CGI information that is of the fifth cell, that is obtained through measurement in the fourth cell, and that is allowed to be reported by the terminal device. If CGI information of P fifth cells is allowed to be reported, the second configuration information may include indication information of P. Optionally, if the terminal device obtains CGI information of Q fifth cells through measurement, the terminal device may report CGI information of any P fifth cells in the CGI information of the Q fifth cells.

For example, the identifier of the fourth cell identifies the fourth cell, and may be, for example, a PCI of the fourth cell. The sixth indication information may be 1-bit information. For example, if a value of the 1-bit information is "1", it indicates that the terminal device needs to attempt to measure, in the fourth cell, CGI information of a cell other than the CGI information of the fourth cell.

The fourth cell is a cell whose CGI information needs to be measured by the terminal device, and a common signal broadcast in the fourth cell by a network device to which the fourth cell belongs includes the CGI information of the fourth cell, and may further include CGI information of another cell (for example, the fifth cell).

For example, the fourth cell is a cell corresponding to a BCC, and the fourth cell broadcasts an SSB and system information, where the system information includes at least the following content:
(1) information about the fourth cell, including the identifier of the fourth cell, access information of the fourth cell, configuration information of the fourth cell, and the like; and
(2) information about the fifth cell that assists in sending the system information, including the identifier of the fifth cell, access information of the fifth cell, configuration information of the fifth cell, the CGI information of the fifth cell, or the like. For example, SIB1 information of the fifth cell is sent in the fourth cell, and a CGI-info field included in the SIB1 information of the fifth cell indicates the CGI information of the fifth cell.

Further, after receiving the second configuration information, the terminal device may perform CGI measurement based on the second configuration information. The method procedure shown in FIG. 6 further includes the following step:
S620: The terminal device performs CGI measurement based on the second configuration information, to obtain a CGI measurement result.

Specifically, the terminal device attempts to measure, in the fourth cell, the CGI information of the fourth cell and the CGI information of the fifth cell based on the identifier of the fourth cell and the sixth indication information that are in the second configuration information.

Optionally, the second configuration information may not include the sixth indication information, and the terminal device still attempts to measure, in the fourth cell, the CGI information of the fourth cell and the CGI information of the fifth cell. For example, the terminal device determines, based on preconfigured or predefined information, that the terminal device needs to attempt to measure, in a to-be-measured cell, CGI information of a current cell and CGI information of another cell.

For example, the network device may send information about a second timer to the terminal device, where the second timer indicates maximum time for the terminal device to measure the second CGI measurement result, so that the terminal device performs the CGI measurement in a running period of the second timer.

The information about the second timer is carried in an RRC message, or is carried in the foregoing second configuration information.

In a possible implementation, the terminal device may independently determine a start moment of the second timer. For example, the terminal device starts the second timer when receiving the information about the second timer. For another example, the terminal device starts the second timer at a moment at which the terminal device starts to measure the CGI information of the fourth cell.

Optionally, when the second timer expires, and the terminal device fails to obtain the CGI information of the fourth cell through measurement, the terminal device stops measuring the CGI information of the fourth cell.

Optionally, the terminal device reports the second CGI measurement result to indicate information indicating that the CGI information of the fourth cell fails to be obtained through measurement. In addition, the second CGI measurement result may further indicate that the second timer expires.

In another possible implementation, the network device may notify the start moment of the second timer by using the information about the second timer. For example, the information that is about the second timer and that is sent by the network device to the terminal device includes indication information of the start moment of the second timer and duration of the second timer.

For example, that the terminal device attempts to measure, in the fourth cell, the CGI information of the fourth cell and the CGI information of the fifth cell includes the following steps.

Step 1: The terminal device attempts to measure, in the fourth cell, the CGI information of the fourth cell, for example, attempts to receive, in the fourth cell, a SIB1 that is of the fourth cell and that is broadcast by the network device to which the fourth cell belongs, and reads a CGI-info field of the fourth cell from the SIB1 of the fourth cell.

In this embodiment, the network device to which the fourth cell belongs broadcasts, in the fourth cell, the CGI information of the fourth cell. In other words, the terminal device can obtain the CGI information of the fourth cell through measurement in the fourth cell.

Step 2: The terminal device attempts to measure, in the fourth cell, the CGI information of the fifth cell, for example, attempts to receive, in the fourth cell, a SIB1 that is of the fifth cell and that is broadcast by the network device to which the fourth cell belongs, and reads a CGI-info field of the fifth cell from the SIB1 of the fifth cell.

Optionally, Step 1 and Step 2 may be performed simultaneously. To be specific, when attempting to measure the CGI information of the fourth cell, the terminal device also attempts to measure the CGI information of the fifth cell.

In a possible implementation, if the terminal device obtains the CGI information of the fourth cell through measurement in the fourth cell, the CGI measurement result includes the CGI information of the fourth cell.

In another possible implementation, if the terminal device obtains the CGI information of the fourth cell and the CGI information of the fifth cell through measurement in the fourth cell, the CGI measurement result includes the CGI information of the fourth cell and the CGI information of the fifth cell.

In still another possible implementation, if the terminal device fails to obtain the CGI information of the fourth cell through measurement in the fourth cell, the CGI measurement result includes information indicating that the CGI information of the fourth cell fails to be obtained through measurement in the fourth cell.

Specifically, the second CGI measurement result includes at least one of the following:
the CGI information of the fourth cell, the CGI information of the fifth cell, information indicating that the CGI information of the fourth cell fails to be obtained through measurement in the fourth cell, information indicating that the CGI information of the fifth cell fails to be obtained through measurement in the fourth cell, information indicating that CGI information of any cell fails to be obtained through measurement in the fourth cell, an indication indicating that the second timer expires, information indicating that the common signal in the fourth cell is not found, or information indicating that the fourth cell is not found.

The CGI information of the fourth cell includes at least one of the following information:
a CGI of the fourth cell, a tracking area code TAC of the fourth cell, a RAN area code RANAC of the fourth cell, a physical cell identifier PCI of the fourth cell, or a public land mobile network list PLMN List of the fourth cell.

The CGI information of the fifth cell includes at least one of the following information:
a CGI of the fifth cell, a tracking area code TAC of the fifth cell, a RAN area code RANAC of the fifth cell, a physical cell identifier PCI of the fifth cell, or a public land mobile network list PLMN List of the fifth cell.

The information indicating that the CGI information of the fourth cell fails to be obtained through measurement includes at least one of the following information:
information indicating that the second timer expires, information indicating that the common signal in the fourth cell does not include the CGI information of the fourth cell, the information indicating that the fourth cell is not found, or the information indicating that the common signal in the fourth cell is not found.

The information indicating that the CGI information of the fifth cell fails to be obtained through measurement includes at least one of the following information:
the information indicating that the second timer expires, information indicating that the common signal in the fourth cell does not include the CGI information of the fifth cell, the information indicating that the fourth cell is not found, or the information indicating that the common signal in the fourth cell is not found.

The information indicating that CGI information of any cell fails to be obtained through measurement in the fourth cell includes at least one of the following information:
the information indicating that the second timer expires, information indicating that the common signal in the fourth cell does not include CGI information of any cell, the information indicating that the fourth cell is not found, or the information indicating that the common signal in the fourth cell is not found.

Specifically, after obtaining the CGI measurement result, the terminal device reports the obtained CGI measurement result to the network device. The method procedure shown in FIG. 6 further includes the following step:
S630: The terminal device sends the second CGI measurement result to the network device. In other words, the network device receives the second CGI measurement result from the terminal device.

For example, before sending the second configuration information to the terminal device, the network device may first determine that the terminal device has a capability of measuring, in the fourth cell, the CGI information of the fifth cell, to avoid a waste of resources caused by still delivering the second configuration information when the terminal device cannot perform CGI measurement based on the second configuration information. For ease of description, in this embodiment, a capability of the terminal device to measure, in a cell (for example, the fourth cell) whose CGI information is to be measured, CGI information of another cell (for example, the fifth cell) is referred to as a second capability. The method procedure shown in FIG. 6 further includes the following step:
S611: The network device determines that the terminal device has the second capability.

In a possible implementation, the second capability of the terminal device is mandatory by default.

For example, it is predefined in a protocol that the terminal device has the second capability.

In another possible implementation, the terminal device actively sends eighth indication information to the network device, where the eighth indication information indicates the second capability of the terminal device.

For example, the terminal device actively reports all capabilities and/or the second capability of the terminal device.

In still another possible implementation, the network device sends a second request message to the terminal device, where the second request message is used to request the terminal device to report all capabilities and/or the second capability.

For example, the network device sends a terminal device capability reporting request to the terminal device, to indicate the terminal device to report whether the terminal device has the second capability, or indicate the terminal device to report a terminal device capability including the second capability.

It should be understood that sequence numbers of the foregoing processes do not mean an execution sequence. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in a conventional network architecture is mainly used as an example for description (for example, a terminal device). It should be understood that a specific form of the device is not limited in embodiments of this application. For example, all devices that can implement a same function in the future are applicable to embodiments of this application.

It may be understood that, in the foregoing method embodiments, methods and operations implemented by the device (for example, the terminal device) may alternatively be implemented by a component (for example, a chip or a circuit) of the device.

The resource selection methods provided in embodiments of this application are described above in detail with reference to FIG. 5 and FIG. 6. The foregoing resource selection methods are mainly described from a perspective of the terminal device. It may be understood that, to implement the foregoing functions, the terminal device includes corresponding hardware structures and/or software modules for performing the functions.

A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail communication apparatuses provided in embodiments of this application with reference to FIG. 7 to FIG. 9. It should be understood that descriptions of apparatus embodiments correspond to the descriptions of the method embodiments. Therefore, for content that is not described in detail, refer to the foregoing method embodiments. For brevity, a part of content is not described again.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division based on each corresponding function.

FIG. 7 is a block diagram of a communication apparatus 10 according to an embodiment of this application. The apparatus 10 includes a transceiver module 11 and a processing module 12. The transceiver module 11 can implement a corresponding communication function. The processing module 12 is configured to perform data processing. In other words, the transceiver module 11 is configured to perform receiving and sending related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement an action of the device in the foregoing method embodiments.

In a design, the apparatus 7 may correspond to the terminal device in the foregoing method embodiments, or may be a component (for example, a chip) of the terminal device.

The apparatus 10 can implement corresponding steps or procedures performed by the terminal device in the foregoing method embodiments. The transceiver module 11 may be configured to perform receiving and sending related operations of the terminal device in the foregoing method embodiments. The processing module 12 may be configured to perform processing-related operations of the terminal device in the foregoing method embodiments.

In a possible implementation, the transceiver module 11 is configured to receive first configuration information from a network device, where the first configuration information indicates the communication apparatus to perform cell global identifier CGI measurement, the first configuration information includes an identifier of a first cell and first indication information, and the first indication information indicates the communication apparatus to measure, in a second cell and/or on a first carrier, CGI information of the first cell; and the transceiver module 11 is configured to send a first CGI measurement result to the network device, where the first CGI measurement result includes the CGI information of the first cell or information indicating that the CGI information of the first cell fails to be obtained through measurement.

In another possible implementation, the transceiver module 11 is configured to receive second configuration information from a network device, where the second configuration information indicates the communication apparatus to perform cell global identifier CGI measurement, and the second configuration information includes an identifier of a fourth cell; the processing module 12 is configured to measure, in the fourth cell, CGI information of the fourth cell and CGI information of a fifth cell; and the transceiver module 11 is configured to send a second CGI measurement result to the network device, where the second CGI measurement result includes at least one of the following:
the CGI information of the fourth cell, the CGI information of the fifth cell, information indicating that the CGI information of the fourth cell fails to be obtained through measurement in the fourth cell, information indicating that the CGI information of the fifth cell fails to be obtained through measurement in the fourth cell, or information indicating that CGI information of any cell fails to be obtained through measurement in the fourth cell.

When the apparatus 10 is configured to perform the method in FIG. 5, the transceiver module 11 may be configured to perform steps of receiving and sending information in the method, for example, steps S510 and S530; and the processing module 12 may be configured to perform a processing step in the method, for example, step S520.

When the apparatus 10 is configured to perform the method in FIG. 6, the transceiver module 11 may be configured to perform steps of receiving and sending information in the method, for example, steps S610 and S630; and the processing module 12 may be configured to perform a processing step in the method, for example, step S620.

It should be understood that a specific process in which the units perform the foregoing corresponding steps is described in detail in the foregoing method embodiments. For brevity, details are not described herein again.

In another design, the apparatus 7 may correspond to the network device in the foregoing method embodiments, or may be a component (for example, a chip) of the network device.

The apparatus 10 can implement corresponding steps or procedures performed by the network device in the foregoing method embodiments. The transceiver module 11 may be configured to perform receiving and sending related operations of the network device in the foregoing method embodiments. The processing module 12 may be configured to perform processing-related operations of the network device in the foregoing method embodiments.

In a possible implementation, the transceiver module 11 is configured to send first configuration information to a terminal device, where the first configuration information indicates the terminal device to perform cell global identifier CGI measurement, the first configuration information includes an identifier of a first cell and first indication information, and the first indication information indicates the terminal device to measure, in a second cell and/or on a first carrier, CGI information of the first cell; and the transceiver module 11 is configured to receive a first CGI measurement result from the terminal device, where the first CGI measurement result includes the CGI information of the first cell or information indicating that the CGI information of the first cell fails to be obtained through measurement.

In another possible implementation, the transceiver module 11 is configured to send second configuration information to a terminal device, where the second configuration information indicates the terminal device to perform cell global identifier CGI measurement, the second configuration information includes an identifier of a fourth cell and sixth indication information, and the sixth indication information indicates the terminal device to report CGI information that is of a fifth cell and that is obtained through measurement in the fourth cell; and the transceiver module 11 is configured to receive a second CGI measurement result from the terminal device, where the second CGI measurement result includes at least one of the following:
the CGI information of the fourth cell, the CGI information of the fifth cell, information indicating that the CGI information of the fourth cell fails to be obtained through measurement in the fourth cell, information indicating that the CGI information of the fifth cell fails to be obtained through measurement in the fourth cell, or information indicating that CGI information of any cell fails to be obtained through measurement in the fourth cell.

When the apparatus 10 is configured to perform the method in FIG. 5, the transceiver module 11 may be configured to perform steps of receiving and sending information in the method, for example, steps S510 and S530; and the processing module 12 may be configured to perform a processing step in the method, for example, step S511.

When the apparatus 10 is configured to perform the method in FIG. 6, the transceiver module 11 may be configured to perform steps of receiving and sending information in the method, for example, steps S610 and S630; and the processing module 12 may be configured to perform a processing step in the method, for example, step S611.

It should be understood that a specific process in which the units perform the foregoing corresponding steps is described in detail in the foregoing method embodiments. For brevity, details are not described herein again.

It should be further understood that the apparatus 10 herein is embodied in a form of a functional module. The term "module" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 10 may specifically be the mobility management network element in the foregoing embodiments, and may be configured to perform procedures and/or steps corresponding to the mobility management network element in the foregoing method embodiments. Alternatively, the apparatus 10 may specifically be the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by a device (for example, the terminal device or the network device) in the foregoing method. The function may be implemented by hardware, or may be implemented by hardware executing corresponding software. The hardware or software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to respectively perform receiving and sending operations and processing-related operations in the method embodiments.

In addition, the transceiver module 11 may alternatively be a transceiver circuit (for example, may include a receiving circuit and a sending circuit), and the processing module may be a processing circuit.

FIG. 8 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 8, the apparatus 20 further includes the memory 22, and the memory 22 is configured to store the computer program or the instructions and/or the data. The memory 22 and the processor 21 may be integrated, or may be disposed separately. Optionally, there are one or more memories 22.

Optionally, as shown in FIG. 8, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement operations performed by the terminal device in the foregoing method embodiments.

In another solution, the apparatus 20 is configured to implement operations performed by the network device in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

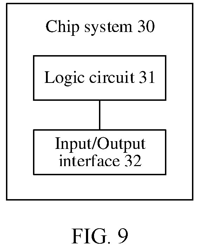

FIG. 9 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the terminal device in the foregoing method embodiments.

For example, the logic circuit 31 is configured to implement processing-related operations performed by the terminal device in the foregoing method embodiments, and the input/output interface 32 is configured to implement sending and/or receiving related operations performed by the terminal device in the foregoing method embodiments.

**In** another solution, the chip system 30 is configured to implement operations performed by the network device in the foregoing method embodiments.

For example, the logic circuit 31 is configured to implement processing-related operations performed by the network device in the foregoing method embodiments, and the input/output interface 32 is configured to implement sending and/or receiving related operations performed by the network device in the foregoing method embodiments.

An embodiment of this application further provides a computer-readable storage medium. The computer-readable storage medium stores computer instructions for implementing the methods performed by the devices in the foregoing method embodiments.

For example, when the computer instructions are executed by a computer, the computer is enabled to implement the method performed by the terminal device or the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system, including the foregoing terminal device and foregoing network device.

For explanations and beneficial effects of related content of any one of the apparatuses provided above, refer to the corresponding method embodiment provided above. Details are not described herein again.

In the several embodiments provided in this application, it should be understood that the disclosed apparatuses and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a network device, first configuration information to a terminal device, wherein the first configuration information indicates the terminal device to perform cell global identifier CGI measurement, the first configuration information comprises an identifier of a first cell and first indication information, and the first indication information indicates the terminal device to measure, in a second cell and/or on a first carrier, CGI information of the first cell; and
receiving, by the network device, a first CGI measurement result from the terminal device, wherein the first CGI measurement result comprises the CGI information of the first cell or information indicating that the CGI information of the first cell fails to be obtained through measurement.

2. The method according to claim 1, wherein the first indication information comprises an identifier of the second cell and/or frequency information of the first carrier.

3. The method according to claim 1 or 2, wherein the first configuration information further comprises at least one of the following information: second indication information, third indication information, or fourth indication information, wherein
the second indication information indicates that the terminal device is allowed to measure, in a cell other than the first cell or on a carrier other than a carrier of the first cell, the CGI information of the first cell;
the third indication information indicates whether the terminal device is allowed to report CGI information that is of a third cell and that is obtained through measurement in the second cell and/or on the first carrier; and
the fourth indication information indicates a quantity of pieces of CGI information that is of the third cell, that is obtained through measurement in the second cell and/or on the first carrier, and that is allowed to be reported by the terminal device.

4. The method according to claim 3, wherein when the third indication information indicates that the terminal device is allowed to report the CGI information that is of the third cell and that is obtained through measurement in the second cell and/or on the first carrier, and the terminal device obtains the CGI information of the third cell through measurement, the method further comprises:
receiving, by the network device, the CGI information of the third cell from the terminal device.

5. The method according to claim 4, wherein the CGI information of the third cell comprises at least one of the following information:
a cell global identifier CGI of the third cell, a tracking area code TAC of the third cell, a RAN area code RANAC of the third cell, a physical cell identifier PCI of the third cell, or a public land mobile network list PLMN List of the third cell.

6. The method according to any one of claims 1 to 4, wherein the CGI information of the first cell comprises at least one of the following information:
a cell global identifier CGI of the first cell, a tracking area code TAC of the first cell, a RAN area code RANAC of the first cell, a physical cell identifier PCI of the first cell, or a public land mobile network list PLMN List of the first cell.

7. The method according to any one of claims 1 to 6, wherein the information indicating that the CGI information of the first cell fails to be obtained through measurement comprises at least one of the following information:
information indicating that a first timer expires, information indicating that a common signal in the second cell does not comprise the CGI information of the first cell, information indicating that a common signal on the first carrier does not comprise the CGI information of the first cell, information indicating that the common signal in the second cell is not found, information indicating that the common signal on the first carrier is not found, information indicating that the second cell is not found, or information indicating that the first carrier is not found.

8. The method according to any one of claims 1 to 7, wherein the method further comprises:
sending, by the network device, the first timer to the terminal device, wherein the first timer indicates maximum time for the terminal device to measure the CGI information of the first cell.

9. The method according to any one of claims 1 to 8, wherein before the sending, by a network device, first configuration information to a terminal device, the method further comprises:
receiving, by the network device, fifth indication information from the terminal device, wherein the fifth indication information indicates a first capability of the terminal device, wherein
the first capability comprises a capability of the terminal device to measure, in the second cell and/or on the first carrier, the CGI information of the first cell.

10. A communication method, comprising:
receiving, by a terminal device, first configuration information from a network device, wherein the first configuration information indicates the terminal device to perform cell global identifier CGI measurement, the first configuration information comprises an identifier of a first cell and first indication information, and the first indication information indicates the terminal device to measure, in a second cell and/or on a first carrier, CGI information of the first cell; and
sending, by the terminal device, a first CGI measurement result to the network device, wherein the first CGI measurement result comprises the CGI information of the first cell or information indicating that the CGI information of the first cell fails to be obtained through measurement.

11. The method according to claim 10, wherein the first indication information comprises an identifier of the second cell and/or frequency information of the first carrier.

12. The method according to claim 10 or 11, wherein the first configuration information further comprises at least one of the following information: second indication information, third indication information, or fourth indication information, wherein
the second indication information indicates that the terminal device is allowed to measure, in a cell other than the first cell or on a carrier other than a carrier of the first cell, the CGI information of the first cell;
the third indication information indicates whether the terminal device is allowed to report CGI information that is of a third cell and that is obtained through measurement in the second cell and/or on the first carrier; and
the fourth indication information indicates a quantity of pieces of CGI information that is of the third cell, that is obtained through measurement in the second cell and/or on the first carrier, and that is allowed to be reported by the terminal device.

13. The method according to claim 12, wherein when the third indication information indicates that the terminal device is allowed to report the CGI information that is of the third cell and that is obtained through measurement in the second cell and/or on the first carrier, the method further comprises:
obtaining, by the terminal device, the CGI information of the third cell through measurement in the second cell and/or on the first carrier; and
sending, by the terminal device, the CGI information of the third cell to the network device.

14. The method according to claim 13, wherein the CGI information of the third cell comprises at least one of the following information:
a cell global identifier CGI of the third cell, a tracking area code TAC of the third cell, a RAN area code RANAC of the third cell, a physical cell identifier PCI of the third cell, or a public land mobile network list PLMN List of the third cell.

15. The method according to any one of claims 10 to 14, wherein the CGI information of the first cell comprises at least one of the following information:
a CGI of the first cell, a tracking area code TAC of the first cell, a RAN area code RANAC of the first cell, a physical cell identifier PCI of the first cell, or a public land mobile network list PLMN List of the first cell.

16. The method according to any one of claims 10 to 15, wherein the information indicating that the CGI information of the first cell fails to be obtained through measurement comprises at least one of the following information:
information indicating that a first timer expires, information indicating that a common signal in the second cell does not comprise the CGI information of the first cell, information indicating that a common signal on the first carrier does not comprise the CGI information of the first cell, information indicating that the common signal in the second cell is not found, information indicating that the common signal on the first carrier is not found, information indicating that the second cell is not found, or information indicating that the first carrier is not found.

17. The method according to any one of claims 10 to 16, wherein the method further comprises:
receiving, by the terminal device, the first timer from the network device, wherein the first timer indicates maximum time for the terminal device to measure the CGI information of the first cell; and
measuring, by the terminal device, in the second cell and/or on the first carrier, the CGI information of the first cell in a running period of the first timer.

18. The method according to any one of claims 10 to 17, wherein the method further comprises:
measuring, by the terminal device, in the second cell, the CGI information of the first cell; and/or
measuring, by the terminal device, on the first carrier, the CGI information of the first cell.

19. The method according to claim 18, wherein the measuring, by the terminal device, in the second cell, the CGI information of the first cell comprises:
receiving, by the terminal device, in the second cell, a first common signal, and measuring the CGI information of the first cell from the first common signal; and
the measuring, by the terminal device, on the first carrier, the CGI information of the first cell comprises:
receiving, by the terminal device, on the first carrier, a second common signal, and measuring the CGI information of the first cell from the second common signal.

20. The method according to any one of claims 11 to 19, wherein before the receiving, by a terminal device, first configuration information from a network device, the method further comprises:
sending, by the terminal device, fifth indication information to the network device, wherein the fifth indication information indicates a first capability of the terminal device, wherein
the first capability comprises a capability of the terminal device to measure, in the second cell and/or on the first carrier, the CGI information of the first cell.

21. A communication method, comprising:
sending, by a network device, second configuration information to a terminal device, wherein the second configuration information indicates the terminal device to perform cell global identifier CGI measurement, the second configuration information comprises an identifier of a fourth cell and sixth indication information, and the sixth indication information indicates the terminal device to report CGI information that is of a fifth cell and that is obtained through measurement in the fourth cell; and
receiving, by the network device, a second CGI measurement result from the terminal device, wherein the second CGI measurement result comprises at least one of the following:
CGI information of the fourth cell, the CGI information of the fifth cell, information indicating that the CGI information of the fourth cell fails to be obtained through measurement in the fourth cell, information indicating that the CGI information of the fifth cell fails to be obtained through measurement in the fourth cell, or information indicating that CGI information of any cell fails to be obtained through measurement in the fourth cell.

22. The method according to claim 21, wherein the second configuration information further comprises seventh indication information, and the seventh indication information indicates a quantity of pieces of CGI information that is of the fifth cell, that is obtained through measurement in the fourth cell, and that is allowed to be reported by the terminal device.

23. The method according to claim 21 or 22, wherein the method further comprises:
sending, by the network device, a second timer to the terminal device, wherein the second timer indicates maximum time for the terminal device to measure the second CGI measurement result.

24. The method according to any one of claims 21 to 23, wherein before the sending, by a network device, second configuration information to a terminal device, the method further comprises:
receiving, by the network device, eighth indication information from the terminal device, wherein the eighth indication information indicates a second capability of the terminal device, wherein
the second capability comprises a capability of the terminal device to measure, in the fourth cell, the CGI information of the fifth cell.

25. A communication method, comprising:
receiving, by a terminal device, second configuration information from a network device, wherein the second configuration information indicates the terminal device to perform cell global identifier CGI measurement, and the second configuration information comprises an identifier of a fourth cell;
measuring, by the terminal device, in the fourth cell, CGI information of the fourth cell and CGI information of a fifth cell; and
sending, by the terminal device, a second CGI measurement result to the network device, wherein the second CGI measurement result comprises at least one of the following:
the CGI information of the fourth cell, the CGI information of the fifth cell, information indicating that the CGI information of the fourth cell fails to be obtained through measurement in the fourth cell, information indicating that the CGI information of the fifth cell fails to be obtained through measurement in the fourth cell, or information indicating that CGI information of any cell fails to be obtained through measurement in the fourth cell.

26. The method according to claim 25, wherein the second configuration information further comprises sixth indication information, and the sixth indication information indicates the terminal device to report the CGI information that is of the fifth cell and that is obtained through measurement in the fourth cell.

27. The method according to claim 25 or 26, wherein the second configuration information further comprises seventh indication information, and the seventh indication information indicates a quantity of pieces of CGI information that is of the fifth cell, that is obtained through measurement in the fourth cell, and that is allowed to be reported by the terminal device.

28. The method according to any one of claims 25 to 27, wherein the method further comprises:
receiving, by the terminal device, a second timer from the network device, wherein the second timer indicates maximum time for the terminal device to measure the second CGI measurement result; and
measuring, by the terminal device, in the fourth cell, the CGI information of the fourth cell and the CGI information of the fifth cell in a running period of the second timer.

29. The method according to any one of claims 25 to 28, wherein the measuring, by the terminal device, in the fourth cell, CGI information of the fourth cell and CGI information of a fifth cell comprises:
receiving, by the terminal device, in the fourth cell, a third common signal, and measuring the CGI information of the fourth cell and the CGI information of the fifth cell from the third common signal.

30. A network device, wherein the network device comprises a processor and a memory, the processor is coupled to the memory, the memory is configured to store a computer program, and when the processor runs the computer program, the network device is enabled to perform the method according to any one of claims 1 to 9 or the method according to any one of claims 21 to 24.

31. A terminal device, wherein the network device comprises a processor and a memory, the processor is coupled to the memory, the memory is configured to store a computer program, and when the processor runs the computer program, the network device is enabled to perform the method according to any one of claims 10 to 20 or the method according to any one of claims 25 to 29.

32. A computer-readable storage medium, wherein the computer-readable storage medium stores computer instructions, and when the computer instructions are run on a first terminal, the first terminal is enabled to perform the method according to any one of claims 1 to 29.

33. A computer program product, comprising instructions, wherein when the computer instructions are run on a first terminal, the first terminal is enabled to perform the method according to any one of claims 1 to 29.

34. A chip, wherein the chip is installed on a first terminal, the chip comprises a processor and a communication interface, and when the processor reads instructions through the communication interface and runs the instructions, the first terminal is enabled to perform the method according to any one of claims 1 to 29.
